(19) **Europäisches Patentamt**
**European Patent Office**
**Office européen des brevets**

(11) **EP 1 360 579 B1**

(12) **EUROPÄISCHE PATENTSCHRIFT**

(45) Veröffentlichungstag und Bekanntmachung des Hinweises auf die Patenterteilung:
**14.03.2007 Patentblatt 2007/11**

(21) Anmeldenummer: **02714108.4**

(22) Anmeldetag: **24.01.2002**

(51) Int Cl.:
**G06F 7/72** $^{(2006.01)}$

(86) Internationale Anmeldenummer:
**PCT/EP2002/000719**

(87) Internationale Veröffentlichungsnummer:
**WO 2002/067108 (29.08.2002 Gazette 2002/35)**

(54) **VERFAHREN UND VORRICHTUNG ZUM MODULAREN MULTIPLIZIEREN UND RECHENWERK ZUM MODULAREN MULTIPLIZIEREN**

METHOD AND DEVICE FOR CONDUCTING MODULAR MULTIPLICATION AND ARITHMETIC-LOGIC UNIT FOR CONDUCTING MODULAR MULTIPLICATION

PROCEDE ET DISPOSITIF DE MULTIPLICATION MODULAIRE ET UNITE DE CALCUL DE MULTIPLICATION MODULAIRE

(84) Benannte Vertragsstaaten:
**AT DE ES FR GB IT**

(30) Priorität: **16.02.2001 DE 10107376**

(43) Veröffentlichungstag der Anmeldung:
**12.11.2003 Patentblatt 2003/46**

(73) Patentinhaber: **Infineon Technologies AG**
**81669 München (DE)**

(72) Erfinder:
- **ELBE, Astrid**
  **81829 München (DE)**
- **SEDLAK, Holger**
  **82045 Sauerlach (DE)**
- **JANSSEN, Norbert**
  **81667 München (DE)**
- **SEIFERT, Jean-Pierre**
  **81669 München (DE)**

(74) Vertreter: **Zinkler, Franz**
**Schoppe, Zimmermann, Stöckeler & Zinkler**
**Postfach 246**
**82043 Pullach bei München (DE)**

(56) Entgegenhaltungen:
**WO-A-00/38047 DE-A- 3 631 992**

- **DRESCHER W ET AL: "VLSI ARCHITECTURES FOR MULTIPLICATION IN GF(2M) FOR APPLICATION TAILORED DIGITAL SIGNAL PROCESSORS" VLSI SIGNAL PROCESSING, IX, SAN FRANCISCO, CA, USA, 30 OCT.-1 NOV. 1996, 1996, Seiten 55-64, XP000827643 IEEE New York (NY), USA**
- **ORTON G A ET AL: "VLSI IMPLEMENTATION OF PUBLIC-KEY ENCRYPTION ALGORITHMS" ADVANCES IN CRYPTOLOGY. SANTA BARBARA, AUG. 11 - 15, 1986, PROCEEDINGS OF THE CONFERENCE ON THEORY AND APPLICATIONS OF CRYPTOGRAPHIC TECHNIQUES (CRYPTO), BERLIN, SPRINGER, DE, Bd. CONF. 6, 1986, Seiten 277-301, XP000090670**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung bezieht sich auf Verfahren und Vorrichtungen zum Durchführen einer modularen Multiplikation und z. B. auf die modulare Multiplikation für elliptische Kurven über GF($2^n$).

Die Kryptographie ist eine der wesentlichen Anwendungen für die modulare Arithmetik. Abhängig von der Gestalt des Moduls N werden grundsätzlich zwei Kryptographiemethoden unterschieden. Ist der Modul eine Ganzzahl, so wird von einer Z/NZ-Arithmetik gesprochen. Der Parameter N steht für eine Primzahl oder für zusammengesetzte Primzahlen. Der Parameter Z steht für ganze Zahlen. Ein Beispiel für den Fall, bei dem der Modul aus zwei Primzahlen zusammengesetzt ist, ist die RSA-Gleichung:

$$C = M^E \bmod(N).$$

Hierbei ist, wie es bekannt ist, C eine verschlüsselte Nachricht, M ist eine nicht-verschlüsselte Nachricht, E ist der öffentliche Schlüssel, und N ist der Modul.

Im Gegensatz dazu ist die GF($2^n$)-Arithmetik dadurch gekennzeichnet, daß der Modul N(x) ein Polynom einer Variablen x ist. Das Polynom umfaßt eine Summe von einzelnen Potenzen von x, wobei jeder Potenz von x ein Koeffizient zugeordnet ist. Der Exponent der höchsten Potenz von x wird als Grad des Polynoms bezeichnet. Wenn die Koeffizienten aus dem Körper GF(2) sind, so wird von einem GF($2^n$)-Modul bzw. allgemeiner von einer GF($2^n$)-Arithmetik gesprochen. Die GF($2^n$)-Arithmetik wird z. B. in der Elliptische-Kurven-Kryptographie verwendet.

Ein Polynom f (x) $\in$ GF(2) [x] des Grads n-1 wird durch die n Koeffizienten $a_{n-1}$, ..., $a_0$ gegeben, wobei die $a_i$ aus der Menge GF(2) sein müssen, und wobei $a_{n-1}$ per Definition gleich 1 ist:

$$f(x) = 1 * x^{n-1} + a_{n-2} * x^{n-2} + ... + a_1 * x^1 + a_0 * x^0$$

Der Körper GF($2^n$) wird durch ein irreduzibles Polynom vom Grad n und Polynome aus GF($2^n$) des Grads kleiner oder gleich n-1 gegeben.

Die Addition in GF($2^n$) von zwei Elementen, d. h. Polynomen, ist gegeben durch die XOR-Verknüpfung ihrer Koeffizientenvektoren der Länge n.

Die Multiplikation in GF($2^n$) von zwei Elementen, d. h. Polynomen, wird durch Multiplizieren der Polynome über GF($2^n$) und das anschließende Reduzieren des erhaltenen Produkts modulo dem irreduziblen Polynom N(x) des Grads n erreicht, welches den entsprechenden Körper definiert.

Somit muß das Produktpolynom, also das Polynom, das sich aus der Multiplikation eines ersten Polynoms f (x) mit einem zweiten Polynom g(x) ergibt, einer Polynomdivision mit dem Modul-Polynom N(x) als Teiler unterzogen werden, um die modulare Operation durchzuführen. Das Ergebnis von f (x) * g(x) mod N(x) ist dann das Restpolynom, das sich aus der Polynomdivision ergibt.

Bevor auf verschiedene Arten und Weisen zum effizienten Ausführen der modularen Multiplikation sowohl über **Z**/N**Z** als auch über GF($2^n$) eingegangen wird, sei darauf hingewiesen, daß die modulare Exponentiation sowohl bei **Z**/N**Z** als auch bei GF($2^n$) mittels des bekannten Square-and-Multiply-Algorithmus in eine Multiplikation zerlegt werden kann. Es sei folgende Gleichung zu lösen:

$$C(x) = (M(x))^E \bmod N(x).$$

Der Square-and-Multiply-Algorithmus basiert darauf, daß der Exponent E in eine Summe von Zweierpotenzen zerlegt wird:

$$E = \sum_i E[i] * 2^i$$

Das folgende Beispiel soll dies veranschaulichen. In binärer Darstellung soll gelten:

$$E = 1011.$$

Damit gilt folgender Zusammenhang:

$$C(x) = M(x)^{\wedge}(1*2^3+0*2^2+1*2^1+1*2^0) \bmod N(x).$$

Damit gilt:

$$C(x) = (M(x))^8*(M(x))^0 * (M(x))^2 * (M(x))^1 \bmod N(x).$$

Die oben beschriebenen Gleichungen lauten entsprechend für die Z/NZ-Arithmetik, jedoch mit dem Unterschied, daß statt M(x) M zu schreiben ist, und statt N(x) N zu schreiben ist.

Eine bekannte, effiziente und oft verwendete Möglichkeit, um die modulare Multiplikation zu berechnen, ist in der Technik als Montgomery-Multiplikation bekannt und z. B. im "Handbook of Applied Cryptography", Menezes, van Oorschot, Vanstone, CRC Press, Seiten 600-603, beschrieben. Die Montgomery-Reduktion ist eine Technik, die eine effiziente Implementation der modularen Multiplikation erlaubt, ohne daß der klassische modulare Reduktionsschritt explizit ausgeführt wird. Allgemein gesagt wird bei der Montogomery-Reduktion die Divisionsoperation durch einfache Verschiebungsoperationen ausgedrückt.

Mittlerweile ist auch eine Erweiterung der Montgomery-Multiplikationsoperation auf den endlichen Körper GF ($2^n$) bekannt. Diese Erweiterung ist in "Montgomery Multiplication in GF($2^k$)", Koc, Azar, Designs, Codes and Cryptography, Bd. 14, 1998, S. 57 - 69, beschrieben. Diese Erweiterung ist ferner in "A Scalable and Unified Multiplier Architecture for Finite Fields **Z**/N**Z** and GF($2^n$)", Erkay Savas u. a., Cryptographic Hardware and Embedded Systems (CHESS 2000), S. 281 - 289, Springer Lecture Notes, beschrieben.

Nachteilig an der Montgomery-Multiplikation über **Z**/N**Z** oder GF($2^n$) ist die Tatsache, daß zwar die hardwaremäßig schlecht implementierbare Divisionsoperation zur modularen Reduktion durch Verschiebungsoperationen umgangen wird, aber keine Look-Ahead-Verfahren oder Vorausschau-Verfahren eingesetzt werden, um die modulare Multiplikationsoperation hardwaremäßig zu beschleunigen.

Die DE 3631992 C2 offenbart ein Verfahren, bei dem die modulare Multiplikation über **Z**/N**Z** unter Verwendung eines Multiplikations-Vorausschau-Verfahrens und unter Verwendung eines Reduktions-Vorausschau-Verfahrens beschleunigt werden kann. Das in der DE 3631992 C2 beschriebene Verfahren wird auch als ZDN-Verfahren bezeichnet und anhand von Fig. 9 näher beschrieben. Nach einem Startschritt 900 des Algorithmus werden die globalen Variablen M, C und N initialisiert. Ziel ist es, folgende modulare Multiplikation zu berechnen:

$$Z = M * C \bmod N.$$

M wird als der Multiplikator bezeichnet, während C als der Multiplikand bezeichnet wird. Z ist das Ergebnis der modularen Multiplikation, während N der Modul ist.

Hierauf werden verschiedene lokale Variablen initialisiert, auf die zunächst nicht näher eingegangen werden braucht. Anschließend werden zwei Vorausschau-Verfahren angewandt. Im Multiplikations-Vorausschau-Verfahren GEN_MULT_LA wird unter Verwendung verschiedener Look-Ahead-Regeln ein Multiplikations-Verschiebungswert $s_Z$ sowie ein Multiplikations-Vorausschau-Parameter a berechnet (910). Hierauf wird der gegenwärtige Inhalt des Z-Registers einer Links-Verschiebungs-Operation um $s_Z$-Stellen unterzogen (920).

Im wesentlichen parallel dazu wird ein Reduktions-Vorausschau-Verfahren GEN_Mod_LA (930) durchgeführt, um einen Reduktionsverschiebungswert $s_N$ und einen Reduktions-Parameter b zu berechnen. In einem Schritt 940 wird dann der gegenwärtige Inhalt des Modul-Registers, also N, um $s_N$ Stellen verschoben, um einen verschobenen Modulwert N' zu erzeugen. Die zentrale Drei-Operanden-Operation des ZDN-Verfahrens findet in einem Schritt 950 statt. Hierbei wird das Zwischenergebnis Z' nach dem Schritt 920 zu dem Multiplikanden C, der mit dem Multiplikations-Vorausschau-Parameter a multipliziert ist, und zu dem verschobenen Modul N', der mit dem Reduktions-Vorausschau-Parameter b multipliziert ist, addiert. Je nach aktueller Situation können die Vorausschau-Parameter a und b einen Wert von +1, 0 oder -1 haben.

Ein Fall besteht darin, daß der Multiplikations-Vorausschau-Parameter a +1 beträgt, und daß der Reduktion-Vorausschau-Parameter b -1 beträgt, so daß zu einem verschobenen Zwischenergebnis Z' der Multiplikand C hinzu addiert wird, und der verschobene Modul N' davon subtrahiert wird. a wird u. a. einen Wert gleich 0 haben, wenn das Multiplikations-Vorausschau-Verfahren mehr als eine voreingestellte Anzahl von einzelnen Links-Verschiebungen zulassen würde, also wenn $s_Z$ größer als der maximal zulässige Wert von $s_Z$ ist, der auch als k bezeichnet wird. Für den Fall, daß a gleich 0 ist, und daß Z' aufgrund der vorausgehenden modularen Reduktion, also der vorausgehenden Subtraktion des verschobenen Moduls noch ziemlich klein ist, und insbesondere kleiner als der verschobene Modul N' ist, muß keine Reduktion stattfinden, so daß der Parameter b gleich 0 ist.

Die Schritte 910 bis 950 werden so lange durchgeführt, bis sämtliche Stellen des Multiplikanden abgearbeitet sind, also bis m gleich 0 ist, und bis auch ein Parameter n gleich 0 ist, welcher angibt, ob der verschobene Modul N' noch größer als der ursprüngliche Modul N ist, oder ob trotz der Tatsache, daß bereits sämtliche Stellen des Multiplikanden abgearbeitet sind, noch weitere Reduktionsschritte durch Subtrahieren des Moduls von Z durchgeführt werden müssen.

Abschließend wird noch bestimmt, ob Z kleiner als 0 ist. Falls dies der Fall ist, muß, um eine abschließende Reduktion zu erreichen, der Modul N zu Z hinzuaddiert werden, damit schließlich ein positives Ergebnis Z der modularen Multiplikation erhalten wird. In einem Schritt 960 ist die modulare Multiplikation mittels des ZDN-Verfahrens beendet.

Der Multiplikations-Verschiebungswert $s_Z$ sowie der Multiplikations-Parameter a, welche im Schritt 910 durch den Multiplikations-Vorausschau-Algorithmus berechnet werden, ergeben sich durch die Topologie des Multiplikators sowie durch die eingesetzten Vorausschau-Regeln, die in der DE 3631992 C2 beschrieben sind.

Der Reduktions-Verschiebungswert $S_N$ und der Reduktions-Parameter b werden, wie es ebenfalls in der DE 3631992 C2 beschrieben ist, durch Vergleich des gegenwärtigen Inhalts des Z-Registers mit einem Wert 2/3 mal N bestimmt. Aufgrund dieses Vergleiches trägt das ZDN-Verfahren seinen Namen (ZDN = Zwei Drittel N).

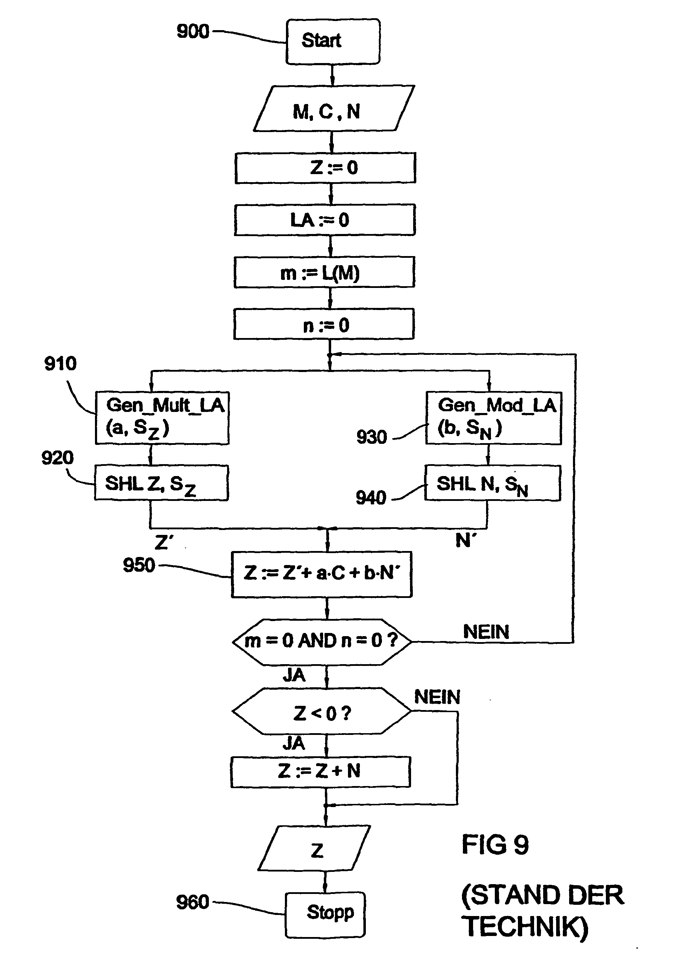

Das ZDN-Verfahren, wie es in Fig. 9 dargestellt ist, führt die modulare Multiplikation auf eine Drei-Operanden-Addition (Block 950 in Fig. 9) zurück, wobei zur Steigerung der Rechenzeiteffizienz das Multiplikations-Vorausschau-Verfahren und damit einhergehend das Reduktions-Vorausschau-Verfahren eingesetzt werden. Im Vergleich zur Montgomery-Reduktion für Z/NZ kann daher ein Rechenzeitvorteil um einen Faktor in der Größenordnung von 3 erreicht werden.

Wie es bereits ausgeführt worden ist, arbeitet das in der DE 3631992 C2 beschriebene ZDN-Verfahren lediglich für die Z/NZ-Arithmetik. Dasselbe ist nicht für die GF($2^n$)-Arithmetik geeignet. Es besteht daher derzeit kein Verfahren, bei dem für die GF($2^n$)-Arithmetik rechenzeiteffiziente Look-Ahead-Verfahren eingesetzt werden können, um die modulare Multiplikation über GF($2^n$) zu beschleunigen.

Die Fachveröffentlichung "VLSI IMPLEMENTATION OF PUBLIC-KEY ENCRYPTION ALGORITHMS", G.A. Orton, u.a., ADVANCES IN CRYPTOLOGY; Santa Barbara; Aug: 11-15, 1986, PROCEEDINGS OF THE CONFERENCE ON THEORY AND APPLICATIONS OF CRPYTOGRAPHIC TECHNIQUES (CRPYTO), Berlin, Springer, 1986, pages 277-301, beschreibt Ergebnisse der CMOS-VLSI-Implementierung von Public-Key-Datenverschlüsselungsalgorithmen. Ein Multiplizierer für das Feld GF($2^4$) umfasst Register für einen ersten Operanden, einen zweiten Operanden und ein Zwischenprodukt. Der Multiplizierer umfasst ferner vier Stufen, von denen jede einen Modulo-Block, zwei Übertragungsgatter und zwei NMOS-Transistoren umfasst.

Die Aufgabe der vorliegenden Erfindung besteht darin, ein Konzept zum schnellen Durchführen einer modularen Multiplikation über GF($2^n$) zu schaffen.

Diese Aufgabe wird durch ein Verfahren zum modularen Multiplizieren gemäß Patentanspruch 1 oder durch eine Vorrichtung zum modularen Multiplizieren gemäß Patentanspruch 6 gelöst.

Der vorliegenden Erfindung liegt die Erkenntnis zugrunde, daß eine Beschleunigung der modularen Multiplikation über GF($2^n$) dadurch erreicht werden kann, daß sowohl ein Multiplikations-Vorausschau-Verfahren als auch ein Reduktions-Vorausschau-Verfahren eingesetzt werden. Im Multiplikations-Vorausschau-Verfahren wird ein Multiplikations-Verschiebungswert berechnet. Im Reduktions-Vorausschau-Verfahren, das vorzugsweise parallel zum Multiplikations-Vorausschau-Verfahren abläuft, wird ein Reduktions-Verschiebungswert berechnet, wobei der Reduktions-Verschiebungswert gleich der Differenz des Grads eines um den Multiplikations-Verschiebungswert verschobenen Zwischenergebnis-Polynoms und des Grads des aktuellen Modul-Polynoms ist. Während das Zwischenergebnis-Polynom mit der Variable, die mit dem Multiplikations-Verschiebungswert potenziert ist, multipliziert wird, wird das Modul-Polynom mit der Variable, die mit dem Reduktions-Verschiebungswert potenziert ist, multipliziert. Damit läßt sich auch für die GF $(2^n)$-Arithmetik eine Drei-Operanden-Addition formulieren, so daß ein neues Zwischenergebnis-Polynom berechnet werden kann, indem das um den Multiplikations-Verschiebungswert verschobene letzte Zwischenergebnis-Polynom mit dem Multiplikanden summiert wird, und indem dann davon das um den Reduktions-Verschiebungswert verschobene Modul-Polynom subtrahiert wird, um ein aktualisiertes Zwischenergebnis-Polynom zu erhalten. Anschließend werden sämtlich Schritte wiederholt, jedoch nun mit dem aktualisierten Zwischenergebnis-Polynom und dem in dem letzten Schritt verschobenen Modul-Polynom, um nacheinander sämtliche Partialprodukte aufzusummieren, d. h. bis alle Potenzen des Multiplikators abgearbeitet sind.

Die Drei-Operanden-Addition vereinfacht sich für den Fall der GF $(2^n)$-Arithmetik insbesondere dadurch, daß die Koeffizienten der Potenzen der Variablen x entweder den Wert "0" oder "1" haben können. Damit wird sowohl die Addition als auch die Subtraktion zu einer einfachen XOR-Verknüpfung, so daß für ein Rechenwerk, das lediglich für die GF $(2^n)$-Addition ausgeführt ist, als arithmetische Einheit nicht einmal mehr ein Addierer benötigt wird, sondern lediglich eine bitweise XOR-Verknüpfung der drei Operanden.

Im Falle eines dualen Rechenwerks, also eines Rechenwerks, das sowohl eine modulare Multiplikation in Z/NZ als auch eine modulare Multiplikation in GF $(2^n)$ ausführen soll, kann der bereits für das ZDN-Verfahren vorhandene Drei-Operanden-Addierer einfach dadurch für GF $(2^n)$-Operationen modifiziert werden, daß der Übertrag für jedes Bit des Addierers ausgeschaltet wird, bzw. nicht berücksichtigt wird.

Es sei darauf hingewiesen, daß das erfindungsgemäße Verfahren zum Berechnen der modularen Multiplikation in GF $(2^n)$ eine Seriell-Parallel-Architektur hat. Die Drei-Operanden-Addition findet vorzugsweise immer parallel statt, d. h. für sämtliche Bits der Summanden, welche typischerweise eine Breite zwischen 150 und 1100 Bits haben, wobei dann in einer nächsten, seriellen, Iteration des erfindungsgemäßen Verfahrens ein neues Partialprodukt berechnet wird und in einer folgenden parallelen Drei-Operanden-Addition zu dem bereits bestehenden Zwischenergebnis hinzuaddiert wird.

Das erfindungsgemäße Konzept zum Berechnen einer modularen Multiplikation ist dahingehend vorteilhaft, daß es auch für GF $(2^n)$ eine maximale Beschleunigung um einen Faktor in der Größenordnung von zwei im Vergleich zur Montgomery-Multiplikation liefert.

Ein weiterer Vorteil des erfindungsgemäßen Konzepts besteht darin, daß nunmehr ein effizientes Verfahren zum Berechnen der modularen Multiplikation in GF $(2^n)$ angegeben ist, so daß beispielsweise der ECDSA-Algorithmus (ECDSA = Elliptic Curve Digital Signature Algorithm) über GF $(2^n)$ berechnet werden kann. Dieser Algorithmus ist in "Public Key Cryptography for the Financial Services Industry: The Elliptic Curve D.S.A.", ANSI X9.62 - 1998 beschrieben.

Es sei darauf hingewiesen, daß die Elliptische-Kurven-Kryptographie im Vergleich zur Kryptographie, die auf modularer Arithmetik bezüglich einer Ganzzahl basiert, dahingehend bevorzugt wird, daß mit wesentlich kleineren Zahlen ähnliche Sicherheitsstandards erreicht werden. Während für das RSA-Verfahren über Z/NZ mit 1024 Bits breiten Zahlen gute Sicherheitsstandards erreicht werden, genügen hierfür bereits Polynome über GF(2), deren Grad im Bereich von 150 bis 300 Potenzen der Variablen x liegt.

Ein weiterer Vorteil der vorliegenden Erfindung besteht darin, daß das erfindungsgemäße Konzept zum Berechnen der modularen Multiplikation ohne weiteres in bereits bestehende Rechenwerke für das ZDN-Verfahren integriert werden kann, da das eigentlichen Langzahlrechenwerk, nämlich der Drei-Operanden-Addierer, einfach dadurch auf GF $(2^n)$ angepaßt werden kann, daß der bitweise Übertrag deaktiviert wird. Obgleich sich die arithmetischen Einheiten für den Reduktions-Vorausschau-Algorithmus und für den Multiplikations-Vorausschau-Algorithmus für GF $(2^n)$ von den entsprechenden Vorrichtungen für Z/NZ unterscheiden, ist dies für das Gesamtverhalten des Rechenwerks nicht maßgeblich, da hier Additionen, Verschiebungen oder Subtraktionen mit kleinen Zahlen, welche vielleicht nur 8 oder 16 Bit breit sind, so daß die Chipfläche für diese arithmetischen Einheiten, welche auch als Steuereinheiten bezeichnet werden, im Vergleich zum Langzahl-Rechenwerk, also dem Drei-Operanden-Addierer, welcher durchaus über 2048 Bits breit sein kann (in dualer Ausführung für Z/NZ und GF $(2^n)$), nicht wesentlich ins Gewicht fallen.

Ein weiterer Vorteil des erfindungsgemäßen Konzepts für eine modulare Multiplikation in GF $(2^n)$ besteht darin, daß viele Operationen im Vergleich zum ZDN-Verfahren, welches lediglich für die Z/NZ-Arithmetik funktioniert, vereinfacht werden können. So muß bei der erfindungsgemäßen GF $(2^n)$-Modulo-Multiplikation kein Vergleich mit dem 2/3-fachen des Moduls mehr durchgeführt werden. Dieser Vergleich kann in GF $(2^n)$ einfach durch den Vergleich des Grads des Zwischenergebnis-Polynoms mit dem Grad des Modul-Polynoms ersetzt werden. Nachdem der Erwartungswert für den Multiplikations-Verschiebungswert und der Erwartungswert für den Reduktions-Verschiebungswert identisch sind, sind die beiden Vorausschau-Verfahren voneinander entkoppelt, so daß das Potential besteht, daß die beiden Vorausschau-Verfahren unabhängig voneinander arbeiten, was wiederum Rechenzeitvorteile mit sich bringt.

Bevorzugte Ausführungsbeispiele der vorliegenden Erfindung werden nachfolgend bezugnehmend auf die beiliegenden Zeichnungen detailliert erläutert. Es zeigen:

Fig. 1          ein Flußdiagramm zur Veranschaulichung der modularen Exponentiation in GF($2^n$) ;

Fig. 2          ein Flußdiagramm auf hoher Ebene des erfindungsgemäßen Verfahrens;

Fig. 3          ein Flußdiagramm des Multiplikations-Vorausschau-Verfahrens, um den Multiplikations-Verschiebungswert zu berechnen;

Fig. 4          ein Flußdiagramm des Reduktions-Vorausschau-Verfahrens, um den Reduktions-Verschiebungswert zu berechnen;

Fig. 5          einen Ausschnitt eines Drei-Operanden-Addierwerks für die GF($2^n$)-Arithmetik oder die **Z**/N**Z**-Arithmetik.

Fig. 6          eine detaillierte Darstellung der Carry-Abschalt-Funktion;

Fig. 7          ein Blockschaltbild eines **Z**/N**Z**-GF($2^n$)-Rechenwerks;

Fig. 8a bis 8c    eine schematische Darstellung zur Veranschaulichung der Berechnung des Reduktions-Verschiebungswerts;

Fig. 9          ein Übersichtdiagramm des ZDN-Verfahrens zum Durchführen einer modularen Multiplikation in **Z**/N**Z**.

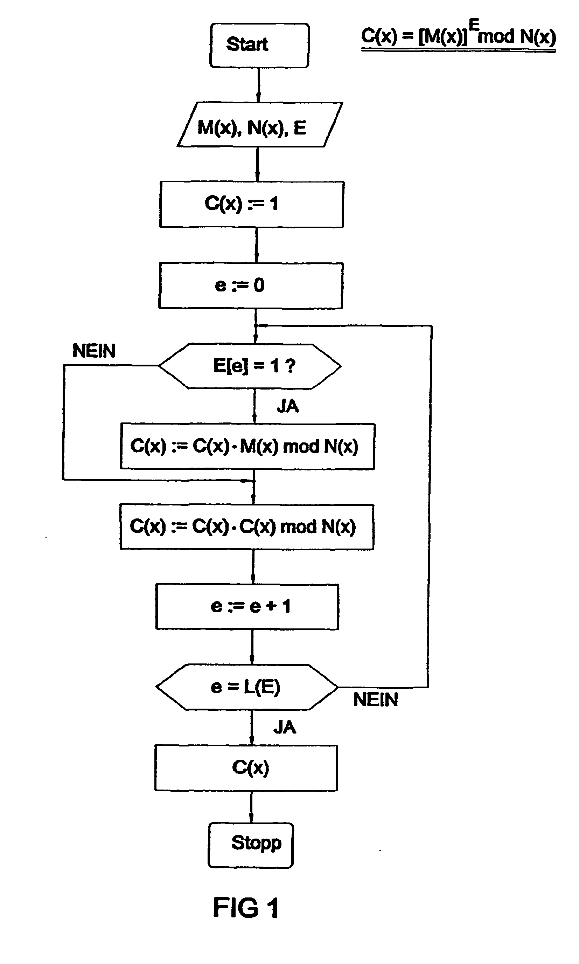

Fig. 1 zeigt ein allgemeines Flußdiagramm zum Zerlegen einer modularen Exponentiation

$$C(x) = (M(x))^E \bmod N(x)$$

in eine Serie von Multiplikationen. M(x) und N(x) sind Polynome der Variablen x. E ist ein Exponent in binärer Darstellung, der eine Bitlänge L(E) aufweist.

Der Algorithmus besteht im wesentlichen darin, daß untersucht wird, ob ein Bit des Exponenten E, also E(e) gleich 1 ist. Falls dies der Fall ist, wird der gegenwärtige Inhalt des Ergebnis-Registers mit M(x) multipliziert, wobei unmittelbar anschließend die Modulo-Reduktion mit dem Modul-Polynom N(x) durchgeführt wird. Ist dagegen ein Bit des Exponenten gleich 0, so wird keine Multiplikation mit M(x) durchgeführt. In beiden Fällen wird der gegenwärtige Inhalt des Registers C(x) mit sich selbst multipliziert, also quadriert, woraufhin die Modulo-Reduktion stattfindet. Hierauf wird der Index für die Stelle des Exponenten, also e, um 1 inkrementiert, woraufhin die Schleife wieder durchlaufen wird. Dies wird so lange durchgeführt, bis alle Stellen des Exponenten E abgearbeitet sind, also bis e gleich L(E) ist. Dann ist der Algorithmus beendet und in dem Register für C(x) steht das Ergebnis der modularen Exponentiation. Die zentrale Operation der modularen Exponentiation ist somit die modulare Multiplikation eines Multiplikanden C(x) mit einem Multiplikator M(x).

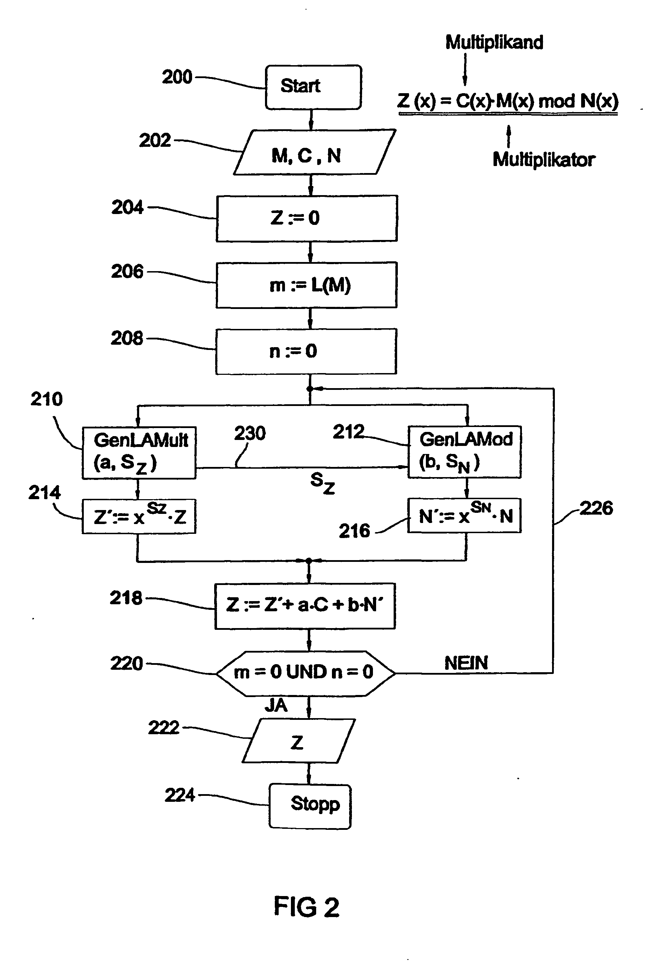

Fig. 2 zeigt ein Blockdiagramm auf hoher Ebene des erfindungsgemäßen Verfahrens zum modularen Multiplizieren eines Multiplikanden mit einem Multiplikator. Das Verfahren beginnt mit einem Start-Block 200. In einem Block 202 werden die globalen Variablen M, C und N initialisiert, welche Polynome der Variablen x sind. In einem Block 204 wird dann das Zwischenergebnis-Polynom Z auf 0 initialisiert. In einem Block 206 wird die Laufvariable m auf L(M) initialisiert. L(M) gibt die Länge in Bit des Multiplikators M an. L(M) entspricht damit dem Grad des Multiplikator-Polynoms. In einem Block 208 wird ferner eine Laufvariable n auf 0 initialisiert. Auf die Bedeutung der Laufvariablen n wird später eingegangen. Anschließend werden vorzugsweise parallel ein Multiplikations-Vorausschau-Verfahren 210 und ein Reduktions-Vorausschau-Verfahren 212 ausgeführt. Das Multiplikations-Vorausschau-Verfahren dient dazu, einen Multiplikations-Verschiebungswert $s_Z$ sowie vorzugsweise einen Multiplikations-Vorausschau-Parameter a zu berechnen.

Das Reduktions-Vorausschau-Verfahren dient dazu, einen Reduktions-Verschiebungswert $s_N$ und vorzugsweise auch einen Reduktions-Vorausschau-Parameter b zu berechnen.

In einem Block 214 wird ein verschobenes Zwischenergebnis-Polynom Z' berechnet, indem das aktuelle Zwischenergebnis-Polynom Z mit der Variablen x, die mit dem Multiplikations-Verschiebungs-Wert $s_Z$ potenziert ist, multipliziert wird.

Vorzugsweise parallel dazu wird in einem Block 216 ein verschobenes Modul-Polynom N' berechnet, indem das aktuelle Modul-Polynom N mit der Variablen x, die mit dem Reduktions-Verschiebungs-Wert $s_N$ potenziert ist, multipliziert wird.

In einem Block 218 wird dann die sogenannten Drei-Operanden-Addition ausgeführt, die die zentrale Operation des erfindungsgemäßen Multiplikationsverfahrens ist. In dem Block 218 wird ein aktualisiertes Zwischenergebnis-Polynom Z berechnet, welches durch Addition des Zwischenergebnis-Polynoms Z' mit dem Multiplikanden C multipliziert mit dem Multiplikations-Vorausschau-Parameter a und dem verschobenen Modul-Polynom N' multipliziert mit dem Reduktions-Vorausschau-Parameter b erhalten wird.

In einem Block 220 wird überprüft, ob die Laufvariable m gleich 0 ist, und ob gleichzeitig die Laufvariable n gleich 0 ist. Wenn die Laufvariable m gleich 0 ist, bedeutet dies, daß alle Bits des Multiplikators M(x) abgearbeitet sind. Wenn die Laufvariable n gleich 0 ist, bedeutet dies, daß das verschobene Modul-Polynom N' wieder dem ursprünglichen Polynom N aus dem Block 202 entspricht.

Sind diese beiden Voraussetzungen erfüllt, wird der Block 220 also mit JA beantwortet, so kann das Ergebnis der modularen Multiplikation, also Z(x), in einem Block 222 ausgegeben werden. Das Verfahren zur modularen Multiplikation ist dann mit einem Block 224 beendet.

Wird der Block 220 dagegen mit "NEIN" beantwortet, so bedeutet dies, daß entweder noch Bits des Multiplikators vorhanden sind, die nicht abgearbeitet worden sind, oder daß das Modul-polynom N', das in dem Register für das Modul-Polynom gehalten wird, noch größer als das ursprüngliche in dem Block 202 definierte Modul-Polynom ist. In anderen Worten bedeutet dies, daß der Grad des aktuellen in dem Register für das Modul-Polynom gehaltenen Polynoms größer ist als der Grad des ursprünglichen Modul-Polynoms N, das im Block 202 definiert worden ist. Wenn dies der Fall ist, wird wieder zurückgesprungen, wie es durch eine Rückkopplung 226 in Fig. 2 gezeigt ist, um erneut sowohl das Multiplikations-Vorausschau-Verfahren als auch das Reduktions-Vorausschau-Verfahren auszuführen. Im Gegensatz zum ersten Schritt, bei dem das Z-Register aufgrund der Initialisierung im Block 204 auf 0 gesetzt war, steht nun im Z-Register das Ergebnis der Drei-Operanden-Operation 218 des vorausgehenden Schritts.

Genauso steht in dem Modul-Register N nun nicht mehr das ursprüngliche im Block 202 definierte Modul N, sondern das um den Reduktions-Verschiebungswert $s_N$ verschobene Modul-Polynom N'. Der ursprüngliche Modul N(x), der in Block 202 definiert worden ist, wird somit nur während des ersten Iterationsschritts in dem N-Register stehen, wobei während der Iteration (Iterationsschleife 226) in dem Modul-Register immer das verschobene Modul-Polynom steht, also ein Modul-Polynom, das mit der Variablen x, die mit einem Reduktions-Verschiebungswert $s_N$ potenziert ist, multipliziert worden ist.

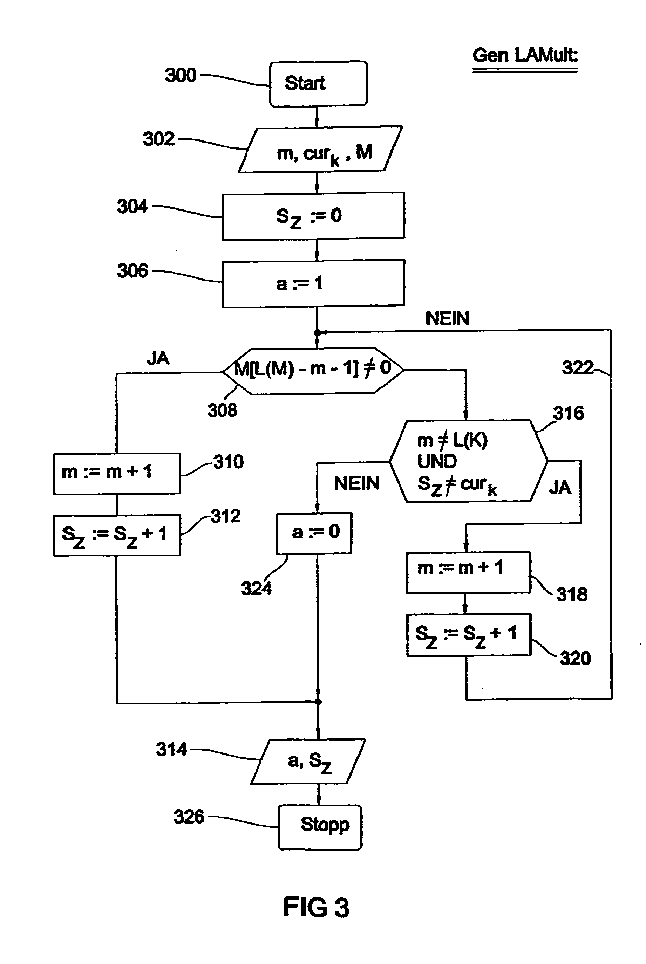

Im nachfolgenden wird auf Fig. 3 eingegangen, welche eine detailliertere Darstellung des Multiplikations-Vorausschau-Verfahrens, also des Blocks 210 von Fig. 2, darstellt. Das Multiplikations-Vorausschau-Verfahren startet in einem Block 300. Es erhält als globale Variablen den Parameter m aus Fig. 2, eine weitere Laufvariable $cur_k$, auf die später noch eingegangen wird, sowie den Multiplikator M. Dies ist durch einen Block 302 in Fig. 3 dargestellt. In einem Block 304 wird dann der Multiplikations-Verschiebungswert $s_Z$ auf 0 initialisiert. Darüber hinaus wird der Multiplikations-Vorausschau-Parameter a, auf den später noch eingegangen wird, auf einen Wert gleich 1 initialisiert (Block 306).

Hierauf wird in einem Block 308 untersucht, ob das gegenwärtig zur Debatte stehende Bit, bzw. der Koeffizient der aktuell verarbeiteten Potenz von x gleich 0 ist oder nicht. Wird in dem Block 308 bestimmt, daß das aktuell verarbeitete Bit des Multiplikators ungleich 0 ist, also wird die Entscheidung des Blocks 308 mit JA beantwortet, so wird die Laufvariable m in einem Block 310 um 1 inkrementiert. Darüber hinaus wird der Multiplikations-Verschiebungswert $s_Z$ ebenfalls in einem Block 312 um 1 inkrementiert. In einem Block 314 werden dann die Ergebnisparameter des Multiplikations-Vorausschau-Verfahrens, also der Multiplikations-Vorausschau-Parameter a und der Multiplikations-Verschiebungswert $s_Z$, ausgegeben.

Wird die Frage im Block 308 mit NEIN beantwortet, so wird zu einem weiteren Entscheidungsblock 316 gesprungen. Hier wird bestimmt, ob die Laufvariable m noch kleiner als die Länge, also der Grad, des Multiplikators M ist. Darüber hinaus wird untersucht, ob der gegenwärtige Multiplikations-Verschiebungswert $s_Z$ kleiner bzw. ungleich dem Parameter $cur_k$ ist. Werden beide Fragen mit JA beantwortet, so wird zu einem Block 318 gesprungen, um den Parameter m um 1 zu inkrementieren. Darüber hinaus wird in einem Block 320 auch der Multiplikations-Verschiebungs-Wert $s_Z$ um 1 inkrementiert. Daran anschließend wird das nächste Bit des Multiplikators M untersucht, was in Fig. 3 durch einen Rückkopplungszweig 322 dargestellt ist.

Wird dagegen in dem Block 316 bestimmt, daß eine der beiden Fragen im Block 316 mit NEIN beantwortet wird, so wird zu einem Block 324 gesprungen, in dem der Multiplikations-Vorausschau-Parameter a auf 0 gesetzt wird. Somit ist zu sehen, daß der Multiplikations-Vorausschau-Parameter a, der in dem Block 314 ausgegeben wird, entweder 0 oder 1 sein kann. Das Multiplikations-Vorausschau-Verfahren ist dann in einem Block 326 beendet.

Im nachfolgenden wird auf die Funktionsweise des Multiplikations-Vorausschau-Parameters eingegangen. Bei dem Multiplikations-Vorausschau-Verfahren, das erfindungsgemäß eingesetzt wird, handelt es sich um einen Look-Ahead-Algorithmus für die $GF(2^n)$-Multiplikation mit variablen Verschiebungen über Nullen, wobei die Anzahl der variablen Verschiebungen nicht beliebig groß werden kann, sondern höchstens gleich dem Wert $CUR_k$ sein kann. "$CUR_k$" steht für "Current k", bedeutet also "aktueller Wert des Parameters k".

Im nachfolgenden wird beispielhaft ein Multiplikatorpolynom mit den Koeffizienten "10001" untersucht. Zunächst wird das höchstwertige Bit desselben untersucht. Dieses Bit hat den Wert "1", so daß der Block 308 mit JA beantwortet wird, was dazu führt, daß der Parameter m um 1 inkrementiert wird, und daß auch der Multiplikations-Verschiebungswert $s_Z$ ebenfalls um 1 erhöht wird. Der Multiplikations-Vorausschau-Algorithmus ist damit bereits beendet, da das untersuchte Bit des Multiplikators den Wert "1" hatte, derart, daß in der Drei-Operanden-Addition der Multiplikand C hinzuaddiert werden muß.

In einem nächsten Durchgang des Multiplikations-Vorausschau-Algorithmus wird nunmehr das zweite Bit untersucht. Dieses Bit hat einen Wert von 0, so daß der Block 308 mit NEIN beantwortet wird. Nachdem das untersuchte Bit gerade das zweite Bit des Multiplikands ist, und nachdem der Multiplikations-Verschiebungswert $s_Z$ aufgrund der Initialisierung im Block 304 nunmehr 0 ist, wird der Block 316 mit JA beantwortet, so daß die Laufvariable m um 1 inkrementiert wird (318), und ebenfalls der Multiplikations-Verschiebungswert um 1 inkrementiert wird (320). Dann wird wieder über den Zweig 322 in den Block 308 eingetreten. Da das nächste Bit ebenfalls den Wert "0" hat, wird dieser Block erneut mit NEIN beantwortet, und der Block 316 ist wieder aktuell. m ist immer noch kleiner als L(M), so daß diese Frage positiv beantwortet wird. $s_Z$ hat gerade den Wert 1. Wenn angenommen wird, daß $CUR_k$ auf dem Wert 2 steht, so wird auch diese Frage positiv beantwortet, so daß erneut in den Blöcken 318 und 320 Inkrementierungen von m und $s_Z$ stattfinden. $s_Z$ hat nunmehr, nach dem Durchlauf des Blocks 320, den Wert 2. Nun wird über den Zweig 320 erneut zum Block 308 gesprungen, um festzustellen, ob das aktuelle nächste Bit eine 1 oder eine 0 ist. Erneut wird für das vorliegende Beispiel der Block 308 mit NEIN beantwortet, da hier das dritte Bit in der Folge von Nullen untersucht wird. Der Block 316 wird nunmehr jedoch mit NEIN beantwortet, da $s_Z$ 2 beträgt und die Variable $CUR_k$ ebenfalls auf 2 steht. Dies bedeutet, daß das Multiplikations-Vorausschau-Verfahren nunmehr eigentlich abgebrochen wird, obwohl auch die dritte 0 dazu verwendet werden könnte, um eine erneute Verschiebung zu bewirken. $s_Z$ muß jedoch nach oben hin begrenzt werden, da sonst ein unendlich langes Z-Register vorgesehen werden müßte, um das verschobene Zwischenergebnis-Polynom Z', das im Schritt 214 von Fig. 2 berechnet wird, speichern zu können. $CUR_k$ wird somit abhängig von der aktuellen Bewegung des Z-Registers eingestellt, um zwar einen möglichst großen Verschiebungswert $s_Z$ zuzulassen, welcher ja zum Geschwindigkeitsgewinn beiträgt, um jedoch gleichzeitig mit einer begrenzten Registerlänge für das verschobene Zwischenergebnis-Polynom Z' auszukommen. Die Drei-Operanden-Operation im Block 218 von Fig. 2 degeneriert somit zu einer Zwei-Operanden-Operation, da der Parameter a in dem Block 324 von Fig. 3 auf 0 gesetzt worden ist.

Wie es aus Fig. 3 zu sehen ist, fand in dem Zweig des Blocks 324 keine weitere Inkrementierung von m statt, so daß bei einem erneuten Durchlauf des Multiplikations-Vorausschau-Algorithmus nunmehr das dritte 0-Bit in der Folge im Block 308 untersucht wird. Da dieses Bit den Wert 0 hat, wird Block 308 wieder mit NEIN beantwortet, so daß der Multiplikations-Verschiebungswert $s_Z$ um 1 inkrementiert wird, und daß auch die Laufvariable im Block 318 inkrementiert wird. Nunmehr wird das letzte Bit des Multiplikators, also die "1" untersucht. Da dieses Bit ungleich 0 ist, wird Block 308 mit JA beantwortet, die Laufvariable wird ein letztes Mal inkrementiert, und der Multiplikations-Verschiebungswert $s_Z$ wird ebenfalls noch einmal inkrementiert, bis der Multiplikations-Vorausschau-Algorithmus für diese Iteration beendet ist (Block 326). Nunmehr sind alle Bits des Multiplikanden untersucht, so daß die Iterationsschleife 226 von Fig. 2 beendet wird, da im Block 220 untersucht wird, ob m gleich 0 ist, was für das vorliegende Beispiel nunmehr zutrifft.

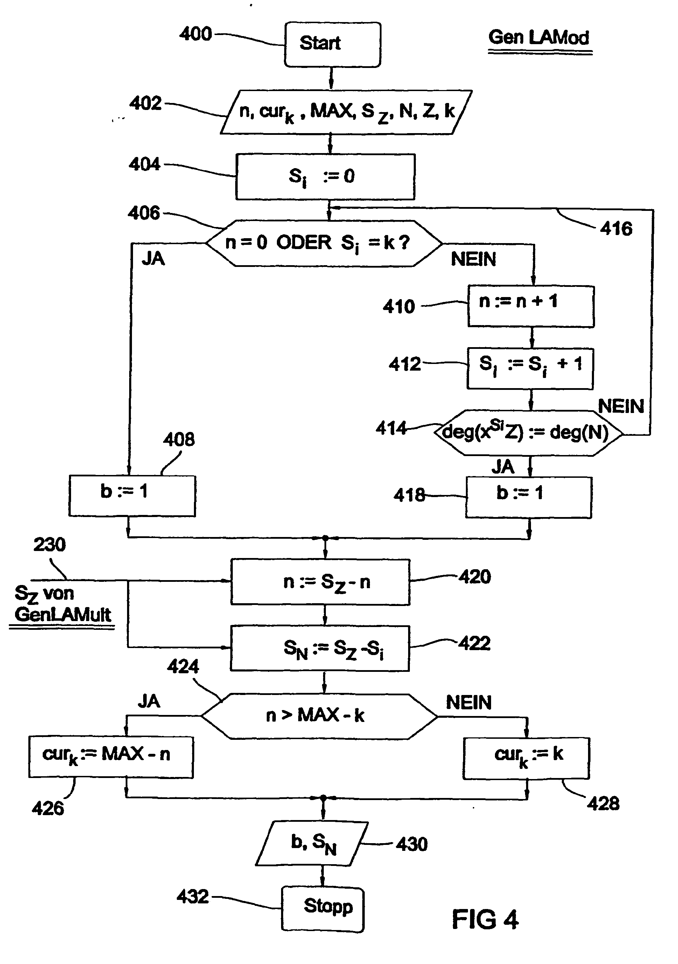

Im nachfolgenden wird auf Fig. 4 eingegangen, um das Reduktions-Vorausschau-Verfahren zu beschreiben, das in Fig. 2 mit dem Bezugszeichen 212 bezeichnet ist. In einem Block 400 wird das Reduktions-Vorausschau-Verfahren begonnen. In einem Block 402 werden verschiedene globale Variablen definiert, von denen insbesondere N und Z hervorzuheben sind. N ist der Registerwert für das Modul-Polynom des vorausgehenden Schrittes, während Z das aktualisierte Zwischenergebnis-Polynom ebenfalls des vorausgehenden Schritts ist. k ist der maximale Verschiebungswert für Z, $CUR_k$ ist der gegenwärtige Verschiebungswert für Z und MAX stellt die Länge, d. h. die Anzahl von Bits, eines Overflow-Buffers dar, welcher dazu da ist, die nach links verschobenen Polynome N und Z zu speichern. Wenn Block 216 von Fig. 2 betrachtet wird, so ist zu sehen, daß, wenn ein beliebig großer Reduktions-Verschiebungswert $s_N$ vorgesehen wird, ebenfalls wie im analogen Fall des Multiplikations-Vorausschau-Verfahrens ein beliebig großes Register für N vorgesehen werden müßte. Dies ist jedoch aus Platz- und Effizienzgründen nicht wünschenswert, so daß durch Effizienzgründen nicht wünschenswert, so daß durch den Parameter MAX auch berücksichtigt wird, daß das Modul-Polynom ebenfalls nur um eine bestimmte Anzahl von Bits nach links, also nach oben, verschoben werden darf.

In einem Block 404 wird dann ein Parameter $s_i$, auf den nachfolgend eingegangen wird, auf 0 initialisiert. Hierauf wird in einem Block 406 festgestellt, ob der Parameter n, welcher die Anzahl von Bits von N darstellt, die in dem Overflow-Puffer sind, gleich 0 ist, oder ob $s_i$ gleich k ist. Wird Block 406 mit JA beantwortet, so wird zu einem Block 408 gesprungen, in dem der Reduktions-Vorausschau-Parameter b auf 0 gesetzt wird. Wird dagegen die Frage im Block 406 mit NEIN beantwortet, so wird der Parameter n um 1 inkrementiert (Block 410). Gleichzeitig wird der Parameter $s_i$ um 1 inkrementiert, wie es durch einen Block 412 dargestellt ist. Anschließend findet in einem Block 414 der zentrale Vergleich statt, durch den bestimmt werden soll, um wieviel das Modul-Polynom verschoben werden muß, damit in der Drei-Operanden-Operation (Block 218 von Fig. 2) eine modulare Reduktion des Zwischenergebnis-Polynoms stattfindet. Hierzu wird der Hilfs-Reduktions-Verschiebungswert $s_i$ so bestimmt, daß der Grad des Polynoms, der sich aus der Multiplikation von x, wobei x mit $s_i$ potenziert ist, multipliziert mit dem aktualisierten Zwischenergebnis-Polynom des vorausgehenden Schritts ergibt, gleich dem Grad des aktuellen Modul-Polynoms ist. Dies wird schrittweise, wie es durch eine Iterationsschleife 416 angedeutet ist, so lange durchgeführt, bis entweder im Block 406 ein JA-Ergebnis erhalten wird, oder bis im Block 414 ein JA-Ergebnis erhalten wird. Wird der Block 414 mit JA beantwortet, so wird in einem Block 418 der Reduktions-Vorausschau-Parameter b zu 1 gesetzt. Dann wird in einem Block 420 ein neuer Parameter n aus der Differenz des Multiplikations-Verschiebungswerts $s_Z$ und dem aktuellen Wert n berechnet. Der eigentliche Reduktions-Verschiebungswert $S_N$ wird dann in einem Block 422 berechnet, indem die Differenz zwischen dem Multiplikations-Verschiebungswert $s_Z$ und dem Hilfs-Reduktions-Verschiebungswert $s_i$ gebildet wird.

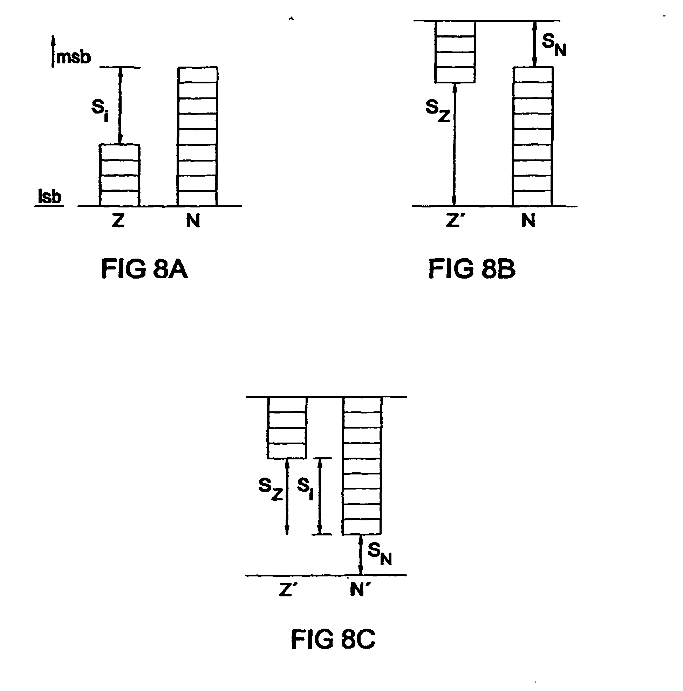

Es sei darauf hingewiesen, daß der Multiplikations-Verschiebungswert $s_Z$ durch den eigentlich parallel ablaufenden Multiplikations-Vorausschau-Algorithmus geliefert wird, wie es durch einen Pfeil 230 in Fig. 2 angedeutet wird. Ohne Einführung des Hilfs-Reduktions-Parameters $s_i$ wäre eigentlich nur eine serielle Ausführung des Multiplikations-Vorausschau-Verfahrens und daran anschließend des Reduktions-Vorausschau-Verfahrens möglich, was aus Effizienzgründen nicht wünschenswert ist. Daher wird der Hilfs-Reduktions-Parameter $s_i$ verwendet, durch den die eigentliche Berechnung des Reduktions-Verschiebungswerts $s_N$ bereits so weit vorbereitet werden kann, daß die aufwendige Iterationsschleife (Zweig 416 in Fig. 4) tatsächlich parallel zum Multiplikations-Vorausschau-Algorithmus abgearbeitet werden kann, während die eigentliche Berechnung des Reduktions-Verschiebungswerts $S_N$ durch eine schnelle Differenzbildung zwischen zwei Kurzzahlen $s_Z$ und $s_i$ durchgeführt werden kann. Der Ablauf stellt sich somit folgendermaßen dar. Parallel werden $s_Z$ und $s_i$ berechnet. Dann wird $s_Z$ über den Zweig 230 von Fig. 2, welcher auch in Fig. 4 eingezeichnet ist, von dem Multiplikations-Vorausschau-Algorithmus zu dem Reduktions-Vorausschau-Algorithmus geliefert, so daß unmittelbar im nächsten Zyklus auch bereits der Reduktions-Verschiebungswert $s_N$ zur Verfügung steht. Hierauf wird später bezugnehmend auf die Fig. 8a bis 8c näher eingegangen.

Nach dem Block 422 wird in einem Block 424 bestimmt, ob n größer als MAX minus k ist. Wird diese Frage mit JA beantwortet, so wird in einem Block 426 ein neues $cur_k$ berechnet. Wird die Frage des Blocks 424 mit NEIN beantwortet, so wird in einem Block 428 $cur_k$ gleich k gesetzt. In einem Block 430 werden dann die Ergebniswerte des Reduktions-Vorausschau-Verfahrens, also b und $s_N$ ausgegeben, so daß das Reduktions-Vorausschau-Verfahren in einem Block 432 beendet ist.

Bezüglich einer detaillierten Erklärung des Multiplikations-Vorausschau-Parameters a und des Reduktions-Vorausschau-Parameters b sowie der Speicher-Management-Parameter n, MAX, k und $cur_k$ wird auf die DE 3631992 C2 Bezug genommen. Im Unterschied zum ZDN-Verfahren für Z/NZ, bei dem die Parameter a und b Werte +1, 0 und -1 einnehmen konnten, können die entsprechenden Parameter a, b im erfindungsgemäßen Verfahren lediglich die Werte 0 und 1 einnehmen. Die Vorausschau-Parameter a und b werden für die modulare Multiplikation gemäß der vorliegenden Erfindung lediglich optional benötigt, nämlich dann, wenn nicht beliebig große Speicherplätze für N und Z zur Verfügung sind. Generell kann das erfindungsgemäße Verfahren jedoch unter der Voraussetzung, daß beliebig große Register zur Verfügung stehen, ohne weiteres ausgeführt werden, in diesem Fall wird das Multiplikations-Vorausschau-Verfahren niemals abgebrochen, sondern immer so lange durchgeführt, bis wieder eine "1" im Multiplikator gefunden wird. Bis dahin hat, wenn auf Block 214 von Fig. 2 Bezug genommen wird, $s_Z$ einen bestimmten möglicherweise großen Wert, so daß das verschobene Zwischenergebnis-Polynom Z' einen möglicherweise sehr großen Wert annehmen kann. Im Block 218 wird dann, aufgrund der Tatsache, daß eine 1 im Multiplikator gefunden wurde, der Multiplikand zu dem verschobenen Zwischenergebnis-Polynom Z' hinzuaddiert.

Ein wesentliches Merkmal ist jedoch, daß gleichzeitig mit jedem Multiplikationsschritt auch eine modulare Reduktion stattfindet, damit insgesamt die Zahlenwerte in erträglichen Grenzen gehalten werden können.

Hierzu wird gemäß der vorliegenden Erfindung der Reduktions-Verschiebungs-Wert $s_N$ so gewählt, daß der Grad des verschobenen Modul-Polynoms gleich dem Grad des aktuellen Zwischenergebnis-Polynoms ist. Wenn dann das verschobene Modul-Polynom von der Summe aus Z'(x) und C(x) subtrahiert wird, wird das aktualisierte Zwischenergebnis Z üblicherweise immer kleiner als Z' sein, so daß eine Reduktion erreicht worden ist. Daraus ist zu sehen, daß das aktualisierte Zwischenergebnis-Polynom Z, das durch den Schritt 218 von Fig. 2 berechnet wird, nicht zwingend bezüglich des ursprünglichen Modul-Polynoms aus dem Block 202 reduziert ist, sondern vielleicht während der gesamten Iteration nur bezüglich eines nach links verschobenen Modul-Polynoms, d. h. eines Modul-Poynoms mit einem höheren Grad, reduziert ist. Dies muß jedoch nicht zwingend so sein. Sollte dieser Fall jedoch auftreten, so wird durch den Schritt 220, in dem festgestellt wird, ob n gleich 0 ist, d. h. ob N Bits im Overflow-Puffer hat oder nicht, erreicht, daß weitere Subtraktionen des Moduls von dem aktualisierten Zwischenergebnis stattfinden, so daß dann Z nach und nach in die ursprüngliche Restklasse zurückgeführt wird. Wenn nämlich n gleich 0 ist, bedeutet dies, daß keine Bits von N mehr in dem Overflow-Puffer sind, was wiederum bedeutet, daß das letztendlich erhaltene verschobene Modul-Polynom gleich dem ursprünglichen Modul-Polynom aus Block 202 ist.

Daher ist zu sehen, daß das erfindungsgemäße Verfahren zum modularen Multiplizieren grundsätzlich auch ohne Vorausschau-Parameter a und b ausgeführt werden könnte, wobei in diesem Fall jedoch - beliebige Multiplikatoren vorausgesetzt - theoretisch unbegrenzte Register für Z und N erforderlich sein würden.

Falls für Z und N eine Speicherbegrenzung vorgesehen wird, also wenn die Vorausschau-Parameter a und b 0 sein können, so bedeutet ein Multiplikations-Vorausschau-Parameter a gleich 0, daß kein Multiplikand zum verschobenen Z' hinzuaddiert wird. Analog dazu bedeutet ein Reduktions-Vorausschau-Parameter b gleich 0, daß das verschobene Modul-Polynom größer als das verschobene Zwischenergebnis-Polynom Z' ist, weshalb keine Reduktion erforderlich ist, so daß die Modul-Subtraktion ebenfalls ausfallen kann. In einem solchen Fall würde die Drei-Operanden-Operation vollständig degenerieren.

An dieser Stelle sei auch darauf hingewiesen, daß im Fall eines begrenzten Buffers für die Register Z und N darauf zu achten ist, daß N mindestens k Bits von seinem Home-MSB weggehalten wird, so lange die Variable m noch nicht den Wert Null erreicht hat.

Es sei ferner darauf hingewiesen, daß im Falle einer GF($2^n$)-Arithmetik, also wenn die Koeffizienten des Polynoms nur 0 oder 1 sein können, die Additionsoperation der Subtraktionsoperation entspricht und allgemein als XOR-Verknüpfung ausgeführt werden kann. Wenn jedoch Koeffizienten des Polynoms in einem anderen Zahlensystem zugelassen würden, beispielsweise in einem Oktal-System oder einem Dezimal-System, so wird die Subtraktion selbstverständlich nicht der Addition entsprechen.

In nachfolgenden wird auf die Fig. 8a bis 8c eingegangen, um die Berechnung des Reduktions-Verschiebungswerts $s_Z$ unter Verwendung des Hilfs-Reduktions-Verschiebungswerts $s_i$ darzustellen. In Fig. 8a sind ein Zwischenergebnis-Polynom Z und ein Modul-Polynom N dargestellt. Lediglich beispielhaft hat das Zwischenergebnis-Polynom den Grad 4, also vier Bits, während das Modul-Polynom den Grad 9, also neun Bits hat. Nunmehr sei angenommen, daß in dem Block 214 von Fig. 2 ein verschobenes Zwischenergebnis-Polynom Z' berechnet wird, was durch Multiplizieren der Variablen x, die mit $s_Z$ potenziert ist, erreicht werden kann. So sei angenommen, daß im Multiplikator 8 Nullen waren, was dazu führt, daß der Multiplikations-Verschiebungswert $s_Z$ gleich 8 war. Um eine modulare Reduktion zu erreichen, muß der Modul N in die Größenordnung des verschobenen Zwischenergebnis-Polynoms Z' kommen. Erfindungsgemäß soll das Modul-Polynom N so weit verschoben werden, daß der Grad des verschobenen Zwischenergebnis-Polynoms Z' und der Grad des verschobenen Modul-Polynoms N gleich sind. Wie es aus Fig. 8b zu sehen ist, ist hierzu ein Reduktions-Verschiebungswert von $s_N$ gleich 3 erforderlich.

Aus Fig. 8b ist ebenfalls zu sehen, daß die Ermittlung von $s_N$ eigentlich erst durchgeführt werden kann, wenn $s_Z$ berechnet worden ist, d. h. daß eine parallele Ausführung der Blöcke 210 und 212 von Fig. 2, wie es für die vorliegende Erfindung bevorzugt wird, nicht möglich ist. Aus diesem Grund wird der Hilfs-Verschiebungs-Parameter $s_i$ eingeführt. Wie es aus Fig. 8a zu sehen ist, ist der Hilfs-Verschiebungs-Parameter $s_i$ gleich der Differenz des Grads des Zwischenergebnis-Polynoms Z und des Modul-Polynoms N. Vorteilhaft an $s_i$ ist, daß dieser Wert berechnet werden kann, ohne das $s_Z$ des aktuellen Schritts zu kennen.

Aus Fig. 8c ist zu sehen, daß $s_Z$ immer gleich der Summe aus $s_i$ und $s_N$ ist. $s_N$ hängt somit immer mit $s_Z$ und $s_i$ derart zusammen, daß folgende Gleichung gilt:

$$s_N = s_Z - s_i.$$

Das zeitaufwendige iterative Verfahren zum Bestimmen von $s_N$ kann somit zerlegt werden in ein zeitaufwendiges iteratives Verfahren zum Bestimmen von $s_i$ (Schleife 416) und eine schnelle Differenz-Operation (Block 422 von Fig. 4). Damit ist eine nahezu parallele Ausführung der beiden Vorausschau-Verfahren möglich, wobei die einzige serielle Komponente darin besteht, daß vor dem Berechnen des Blocks 422 (Fig. 4) der tatsächliche Wert von $s_Z$ durch den Multiplikations-Vorausschau-Algorithmus bereits berechnet und geliefert worden ist (Pfeil 230 in Fig. 2).

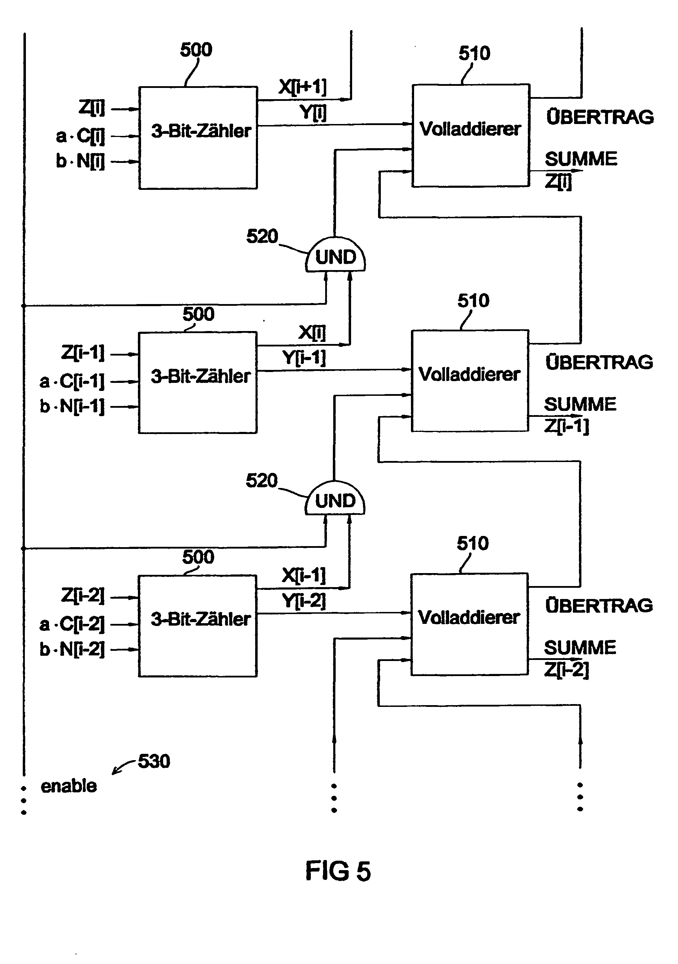

Wie es bereits ausgeführt worden ist, besteht ein wesentlicher Vorteil des erfindungsgemäßen Konzepts zur Berechnung der modularen Multiplikation über GF($2^n$) darin, daß es in das bereits bestehende Langzahl-Rechenwerk für das ZDN-Verfahren integriert werden kann. Fig. 5 zeigt einen Ausschnitt eines erfindungsgemäß angepassten 3-Operanden-Rechenwerks zum Durchführen der Drei-Operanden-Addition mit Z, aC und bN.

In Fig. 5 sind drei untereinander verschaltete Bit-Slices [i], [i-1], [i-2] dargestellt. Jeder Bit-Slice umfasst einen Drei-Bit-Zähler 500 und einem Volladdierer 510, um ausgangsseitig ein Bit Z[i], Z[i-1] bzw. Z[i-2] des aktualisierten Zwischenergebnis-Polynoms zu erhalten. Der Volladdierer hat ferner einen Carry-Ausgang (Carry = Übertrag) für den Carry-Eingang des nächsthöheren Voll-Addierers. Werden beispielsweise Polynome mit dem Grad 200 verarbeitet, so müssen 200 Bit-Slice-Addierer von Fig. 5 parallel geschaltet werden.

Um eine Bit-Slice von Fig. 5 für GF($2^n$) zu modifizieren, muß, wie es in Fig. 5 gezeigt ist, ein UND-Gatter 520 zwischen den oberen Ausgang des 3-Bit-Zählers und den zweituntersten Eingang des Volladdierers der nächsthöheren Stufe eingefügt werden. Wird eine 0 in den Enable-Eingang 530 eingespeist, so wird der Wert x immer 0 sein. Dann degeneriert die Funktion des Volladdierers 510 immer zur Addition von y und 0. Im Falle von Z/NZ wird der Enable-Eingang des UND-Gatters dagegen mit einer "1" beaufschlagt, so daß das UND-Gatter ohne weitere Wirkung ist.

Bei GF($2^n$) ist der Ausgang des UND-Gatters somit gleich 0. Bei Z/NZ wird X dagegen benötigt, und der Ausgang des UND-Gatters kann ungleich 0 sein. Das Enable wird somit durch ein UND-Gatter realisiert. Die Addition im Volladdierer wird dagegen für den Fall von GF($2^n$), also eine 0 am Enable-Eingang 530, trivial.

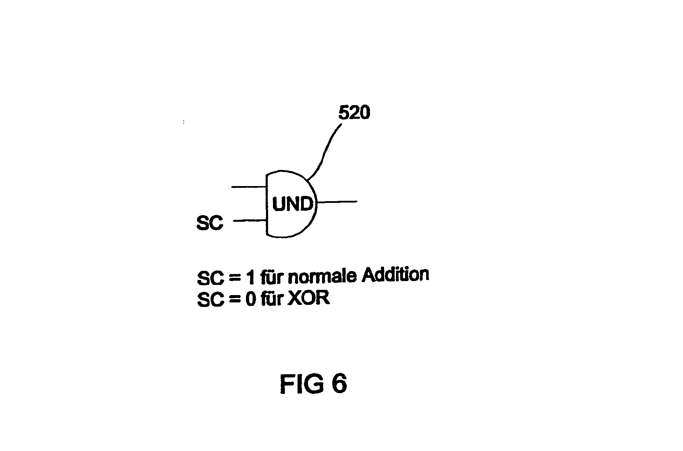

Fig. 6 zeigt die Situation am UND-Gatter 520. Das Rechenwerk, das in Fig. 5 teilweise dargestellt ist, wirkt als normaler Addierer, wenn das Enable-Signal SC = 1 ist. Es wirkt dagegen als XOR-Schaltung, wenn das Enable-Signal SC = 0 ist.

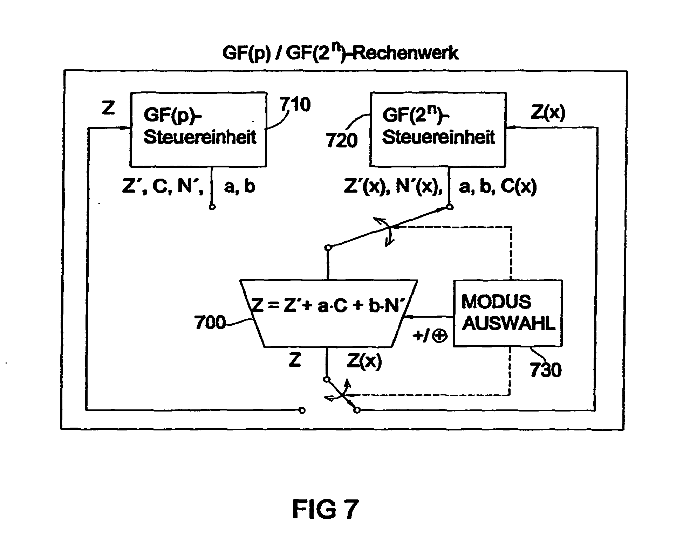

Fig. 7 zeigt ein schematisches Blockschaltbild eines Rechenwerks für Z/NZ und $GF(2^n)$. Das Rechenwerk gruppiert sich um die Langzahl-Arithmetik-Einheit 700, welche die bereits beschriebene Drei-Operanden-Operation entweder für Z/NZ oder $GF(2^n)$ durchführt.

Das Rechenwerk umfaßt ferner eine Z/NZ-Steuereinheit 710 sowie eine $GF(2^n)$-Steuereinheit 720 sowie eine Modusauswahl-Einrichtung 730. Soll das Rechenwerk Operationen Modulo einer ganzen Zahl berechnen, so wird die Modus-Auswahl 730 die arithmetische Einheit 700 derart ansteuern, daß eine echte Additionsoperation durchgeführt wird, wobei die arithmetische Einheit mit der Z/NZ-Steuereinheit 710 eingangsseitig und ausgangsseitig verbunden ist. Soll das Rechenwerk dagegen eine $GF(2^n)$-Arithmetik betreiben, so wird die Modus-Auswahl 730 die arithmetische Einheit 700 so aktivieren, daß statt einer Addition eine XOR-Operation durchgeführt wird, und daß Eingang und Ausgang der arithmetischen Einheit mit der $GF(2^n)$-Steuereinheit verbunden sind.

Es sind somit keine getrennten arithmetischen Einheiten mehr erforderlich, um sowohl eine Ganzzahl-Modulo-Arithmetik als auch eine Polynom-Modulo-Arithmetik in einem Rechenwerk unterzubringen.

Es sei darauf hingewiesen, daß aufgrund der Tatsache, daß die Drei-Operanden-Operation für sämtliche Bits parallel durchgeführt wird, der meiste Chip-Platz für die arithmetische Einheit 700 verbraucht wird, während die weiteren kleineren Berechnungen, die in den Steuereinheiten 710 und 720 auszuführen sind, mit sehr sehr viel kürzeren Zahlen zu bewerkstelligen sind, so daß dieselben bitflächenmäßig nicht besonders ins Gewicht fallen.

Im Gegensatz zu einem Rechenwerk, das sowohl für die Ganzzahl-Arithmetik als auch die Polynom-Arithmetik ein eigenes Rechenwerk benötigte, erlaubt das erfindungsgemäße Konzept zum Berechnen der modularen Multiplikation daher eine Chipflächenreduktion von nahezu 50%. Insbesondere für Smart-Cards führt diese deutliche Chipflächeneinsparung zu erheblichen Wettbewerbsvorteilen.

Bezugszeichenliste

| | |
|---|---|
| 200 | Start des Verfahrens zur modularen Multiplikation |
| 202 | globale Variablen |
| 204 | Initialisieren des Zwischenergebnis-Polynoms |
| 206 | Initialisieren von m |
| 208 | Initialisieren von n |
| 210 | Multiplikations-Vorausschau-Verfahren |
| 212 | Reduktions-Vorausschau-Verfahren |
| 214 | Erzeugen des Zwischenergebnis-Polynoms |
| 216 | Erzeugen des verschobenen Modul-Polynoms |
| 218 | Drei-Operanden-Addition |
| 220 | Überprüfen, ob der Algorithmus beendet ist |
| 222 | Ausgeben von Z |
| 224 | Stopp des Verfahrens zum modularen Multiplizieren |
| 226 | Iterationsschleife |
| 230 | $s_Z$-Übertragung |
| 300 | Start des Multiplikations-Vorausschau-Verfahrens |
| 302 | Globale Variablen |
| 304 | Initialisieren von $s_Z$ |
| 306 | Initialisieren von a |
| 308 | Feststellen, ob das verarbeitete Bit 0 oder 1 ist |
| 310 | Inkrementieren von m |
| 312 | Inkrementieren von $s_Z$ |
| 314 | Ausgeben von a und $s_Z$ |
| 316 | Feststellen, ob weiter verschoben werden kann |
| 318 | Inkrementieren von m |
| 320 | Inkrementieren von $s_Z$ |
| 322 | Iterationsschleife |
| 324 | Einstellen von a |
| 326 | Stopp des Multiplikations-Vorausschau-Verfahrens |
| 400 | Start des Reduktions-Vorausschau-Verfahrens |

402 globale Variablen
404 Initialisieren von $s_i$
406 Feststellen, ob reduziert werden kann
408 Einstellen von b
410 Inkrementieren von n
412 Inkrementieren von $s_i$
414 Überprüfen des Grads des verschobenen Zwischenergebnis-Polynoms
416 Iterationsschleife
418 Einstellen von b
420 Einstellen von n
422 Berechnen von $s_N$
424 Überprüfen von n
426 Einstellen von $cur_k$
428 Einstellen von $cur_k$
430 Ausgeben von b, $s_N$
432 Ende des Reduktions-Vorausschau-Verfahrens
500 Drei-Bit-Zähler
510 Volladdierer
520 Schalter
530 Steuerung
700 Drei-Operanden-Rechenwerk
710 Z/NZ-Steuereinheit
720 $GF(2^n)$-Steuereinheit
730 Modus-Auswahl
900 Start des ZDN-Verfahrens
910 Multiplikations-Vorausschau-Verfahren für den ZDN-Algorithmus
920 Verschieben von Z nach links
930 Reduktions-Vorausschau-Verfahren für den ZDN-Algorithmus
940 Verschieben des Moduls nach links oder nach rechts
950 Drei-Operanden-Addition für den ZDN-Algorithmus
960 Ende des ZDN-Algorithmus

**Patentansprüche**

1. Verfahren zum modularen Multiplizieren eines Multiplikanden (C) mit einem Multiplikator (M) unter Verwendung eines Moduls (N) innerhalb einer kryptographischen Berechnung, die in einem Rechenwerk ausgeführt wird, wobei der Multiplikand (C), der Multiplikator (M) und der Modul (N) Parameter in der kryptographischen Berechnung sind, wobei der Multiplikand (C), der Multiplikator (M) und der Modul (N) Polynome einer Variablen (x) aus dem Körper $GF(2^n)$ sind, und wobei Koeffizienten der Polynome nur den Wert "0" oder "1" haben können, mit folgenden Schritten:

(a) Durchführen (210) eines Multiplikations-Vorausschau-Verfahrens, um einen Multiplikations-Verschiebungswert ($s_Z$) zu erhalten, wobei bei einer Potenz des Multiplikators, die im Multiplikator-Polynom nicht vorhanden ist, der Multiplikations-Verschiebungswert $s_Z$ inkrementiert wird;

(b) Multiplizieren (214) der Variable (x) potenziert mit dem Multiplikations-Verschiebungs-Wert ($s_Z$) mit einem Zwischenergebnis-Polynom (Z), um ein verschobenes Zwischenergebnis-Polynom (Z') zu erhalten;

(c) Durchführen eines Reduktions-Vorausschau-Verfahrens (212), um einen Reduktions-Verschiebungswert ($s_N$) zu erhalten, wobei der Reduktions-Verschiebungswert ($s_N$) gleich der Differenz des Grads des verschobenen Zwischenergebnis-Polynoms (Z) und des Grads des Modul-Polynoms (N) ist;

(d) Multiplizieren (216) der Variable (x) potenziert mit dem Reduktions-Verschiebungswert ($s_N$) mit dem Modul-Polynom (N), um ein verschobenes Modul-Polynom (N') zu erhalten;

(e) Summieren (218) des verschobenen Zwischenergebnis-Polynoms (Z') und des Multiplikanden (C) und Subtrahieren des verschobenen Modul-Polynoms (N'), um ein aktualisiertes Zwischenergebnis-Polynom (Z) zu erhalten; und

(f) Wiederholen (226) der Schritte (a) bis (e), bis sämtliche Potenzen des Multiplikators (M) abgearbeitet sind, wobei bei der Wiederholung der Schritte (a) bis (e)

im Schritt (b) als Zwischenergebnis-Polynom (Z) das aktualisierte Zwischenergebnis-Polynom (Z) des vorausgehenden Schritts (e) verwendet wird, und
im Schritt (c) als Modul-Polynom (N) das verschobene Modul-Polynom des vorausgehenden Schritts (d) verwendet wird, und
wobei das Summieren und das Subtrahieren (218) im Schritt (e) durch bitweises XOR-Verknüpfen des Zwischenergebnis-Polynoms (Z'), des Multiplikanden-Polynoms (C) und des verschobenen Modul-Polynoms (N') ausgeführt werden.

2. Verfahren nach Anspruch 1, bei dem das Multiplizieren (210) im Schritt (d) durch Verschieben der Zwischenergebnis-Polynoms (Z) um eine Anzahl von Stellen gleich dem Multiplikationsverschiebungswert ($s_Z$) ausgeführt wird, und bei dem das Multiplizieren (216) im Schritt (d) durch Verschieben des Modul-Polynoms (M) um eine Anzahl von Stellen gleich dem Reduktions-Verschiebungs-Wert ($s_N$) ausgeführt wird.

3. Verfahren nach einem der vorhergehenden Ansprüche, bei dem der Schritt des Reduktions-Vorausschau-Verfahrens (212), um einen Reduktions-Verschiebungs-Wert ($s_N$) zu erhalten, folgende Schritte aufweist:

   Bestimmen (414) eines Hilfs-Verschiebungs-Werts ($s_i$) so, daß der Grad des Modulpolynoms (N) und der Grad des aktualisierten Zwischenergebnis-Polynoms (Z) des vorausgehenden Schritts (e) multipliziert mit der Variablen, die mit dem Hilfs-Verschiebungswert ($s_i$) potenziert ist, gleich sind, und
   Bilden (422) der Differenz des Multiplikations-Verschiebungswerts ($s_Z$) und des Hilfs-Verschiebungswerts ($s_i$), um den Reduktions-Verschiebungswert ($s_N$) zu erhalten.

4. Verfahren nach Anspruch 3, bei dem der Schritt des Durchführens des Multiplikations-Vorausschau-Verfahrens (210) und der Schritt des Bestimmens (414) des Hilfs-Verschiebungs-Werts ($s_i$) parallel zueinander ausgeführt werden.

5. Verfahren nach einem der vorhergehenden Ansprüche,
   bei dem der Multiplikations-Verschiebungswert ($s_Z$) auf einen Maximal-Multiplikations-Verschiebungswert (k) begrenzt ist,
   bei dem der Schritt des Durchführens (210) des Multiplikations-Vorausschau-Verfahrens folgende Schritte aufweist:

   falls der Multiplikations-Verschiebungs-Wert gleich dem Maximal-Multiplikations-Verschiebungswert (k) ist, Gleichsetzen des Multiplikations-Verschiebungswerts ($s_Z$) mit dem Maximal-Verschiebungs-Wert (k);
   Erzeugen (306, 324) eines Multiplikations-Vorausschau-Parameters (a) mit einem vorbestimmten Wert, und

   bei dem der Schritt des Summierens folgenden Schritt aufweist:

   falls der Multiplikations-Vorausschau-Parameter (a) den vorbestimmten Wert hat,
   Summieren nur des vorbestimmten Zwischenergebnis-Polynoms (Z') und des verschobenen Modul-Polynoms (N').

6. Vorrichtung zum modularen Multiplizieren eines Multiplikanden (C) mit einem Multiplikator (M) unter Verwendung eines Moduls (N) innerhalb einer kryptographischen Berechnung, wobei der Multiplikand (C), der Multiplikator (M) und der Modul (N) Parameter in der kryptographischen Berechnung sind, wobei der Multiplikand (C), der Multiplikator (M) und der Modul (N) Polynome einer Variablen (x) aus dem Körper $GF(2^n)$ sind, und wobei Koeffizienten der Polynome nur den Wert "0" oder "1" haben können, mit folgenden Merkmalen:

   (a) einer Einrichtung zum Durchführen (210) eines Multiplikations-Vorausschau-Verfahrens, um einen Multiplikations-Verschiebungswert ($s_Z$) zu erhalten, wobei bei einer Potenz des Multiplikators, die im Multiplikator-Polynom nicht vorhanden ist, der Multiplikations-Verschiebungswert $s_Z$ inkrementiert wird;
   (b) einer Einrichtung zum Multiplizieren (214) der Variable (x), die mit dem Multiplikations-Verschiebungs-Wert ($s_Z$) potenziert ist, mit einem Zwischenergebnis-Polynom (Z), um ein verschobenes Zwischenergebnis-Polynom (Z') zu erhalten;
   (c) einer Einrichtung zum Durchführen eines Reduktions-Vorausschau-Verfahrens (212), um einen Reduktions-Verschiebungswert ($s_N$) zu erhalten, wobei der Reduktions-Verschiebungswert ($s_N$) gleich der Differenz des Grads des verschobenen Zwischenergebnis-Polynoms (Z) und des Grads des Modul-Polynoms (N) ist;
   (d) einer Einrichtung zum Multiplizieren (216) der Variable (x), die mit dem Reduktions-Verschiebungswert ($s_N$) potenziert ist, und des Modul-Polynoms (N), um ein verschobenes Modul-Polynom (N') zu erhalten;
   (e) einer Einrichtung zum Summieren (218) des verschobenen Zwischenergebnis-Polynoms (Z') und des Multiplikanden (C) und Subtrahieren des verschobenen Modul-Polynoms (N'), um ein aktualisiertes Zwischenergebnis-Polynom (Z) zu erhalten; und

(f) einer Einrichtung zum wiederholten Ansteuern (226) der Einrichtungen (a) bis (e), bis sämtliche Potenzen des Multiplikators (M) abgearbeitet sind, wobei bei einer wiederholten Ansteuerung der Einrichtungen (a) bis (e) die Einrichtung zum Multiplizieren (214), um ein verschobenes Zwischenergebnis-Polynom zu erhalten, angeordnet ist, um als Zwischenergebnis-Polynom (Z) das aktualisierte Zwischenergebnis-Polynom (Z) aus der vorausgehenden Ansteuerung der Einrichtung zum Summieren (218) zu verwenden, und die Einrichtung zum Durchführen eines Reduktions-Vorausschau-Verfahrens (212) angeordnet ist, um bei einer wiederholten Ansteuerung als Modul-Polynom (N) das verschobene Modul-Polynom aus der vorausgehenden Ansteuerung der Einrichtung zum Multiplizieren (216), um ein verschobenes Modul-Polynom zu erhalten, zu verwenden,

wobei die einer Einrichtung zum Summieren (218) des verschobenen Zwischenergebnis-Polynoms (Z') und des Multiplikanden-Polynoms (C) und zum Subtrahieren des verschobenen Modul-Polynoms (N') als bitweise XOR-Verknüpfung des Zwischenergebnis-Polynoms (Z'), des Multiplikanden (C) und des verschobenen Modul-Polynoms (N') ausgeführt ist.

7. Vorrichtung nach Anspruch 6, bei der die Einrichtung (214) zum Multiplizieren, um ein verschobenes Zwischenergebnis-Polynom (Z') zu erhalten, und die Einrichtung (216) zum Multiplizieren, um ein verschobenes Modul-Polynom (N') zu erhalten, als steuerbare Schieberegister ausgeführt sind, um abhängig vom Multiplikations-Verschiebungs-Wert ($s_Z$) oder vom Reduktions-Verschiebungs-Wert ($s_N$) eine Verschiebung des Registerinhalts um eine entsprechende Anzahl von Stellen durchzuführen.

8. Vorrichtung nach Anspruch 6 oder 7, bei der die Einrichtung (218) zum Summieren und Subtrahieren folgende Merkmale aufweist:

   einen Zähler (500) mit drei Eingangsleitungen und zwei Ausgangsleitungen, wobei an eine erste Eingangsleitung ein Bit des Zwischenergebnis-Polynoms (Z) anlegbar ist, wobei an eine zweite Eingangsleitung ein Bit des Multiplikanden (C) anlegbar ist, und wobei an eine dritte Eingangsleitung ein Bit des verschobenen Modul-Polynoms (N') anlegbar ist,
   einen Volladdierer (510) mit drei Eingängen und einem Ausgang, wobei ein niederwertiger Ausgang des Zählers (500) mit einer höherwertigen Eingangsleitung des Volladdierers (510) verbunden ist;
   einen Schalter (520), der zwischen einer höherwertigen Ausgangsleitung des Zählers (500) und einem mittleren Eingang eines Volladdierers (510) für ein höherwertiges Bit geschaltet ist; und
   eine Steuereinrichtung (530) zum Öffnen des Schalters (520), wenn Polynome zu verarbeiten sind.

9. Vorrichtung nach Anspruch 6,
   die als Rechenwerk zum Multiplizieren des Multiplikanden mit dem Multiplikator unter Verwendung des Moduls ausgebildet ist,
   wobei das Rechenwerk ferner, wahlweise, zum Multiplizieren einer Multiplikanden-Ganzzahl mit einer Multiplikator-Ganzzahl unter Verwendung einer Modul-Ganzzahl ausgebildet ist,
   wobei die Einrichtung zum Summieren als Drei-Operanden-Addierer (700), der eine Übertrag-Abschalt-Einrichtung (730) aufweist, zum Kombinieren entweder der Ganzzahl-Operanden oder eines Polynom-Zwischenergebnisses, des verschobenen Modul-Polynoms und des Multiplikanden-Polynoms ausgebildet ist,
   wobei die Vorrichtung ferner eine Steuereinrichtung (730) zum Steuern der Übertrag-Abschalt-Einrichtung aufweist, wobei die Steuereinrichtung so ausgebildet ist, dass ein Übertrag deaktiviert ist, wenn die Polynom-Operanden verarbeitet werden, und dass der Übertrag aktiviert ist, wenn die Ganzzahl-Operanden verarbeitet werden.

10. Rechenwerk nach Anspruch 9, bei dem der Drei-Operanden-Addierer mit einer Übertrag-Abschalt-Einrichtung folgende Merkmale aufweist:

   einen Zähler (500) mit drei Eingangsleitungen und zwei Ausgangsleitungen, wobei an eine erste Eingangsleitung ein Bit des Zwischenergebnisses anlegbar ist, wobei an eine zweite Eingangsleitung ein Bit des Multiplikanden (C) anlegbar ist, und wobei an eine dritte Eingangsleitung ein Bit des verschobenen Moduls anlegbar ist,
   einen Volladdierer (510) mit drei Eingängen und einem Ausgang, wobei ein niederwertiger Ausgang des Zählers (500) mit einer höherwertigen Eingangsleitung des Volladdierers (510) verbunden ist;
   einen Schalter (520), der zwischen einer höherwertigen Ausgangsleitung des Zählers (500) und einen mittleren Eingang eines Volladdierers (510) für ein nächsthöheres Bit geschaltet ist; und

eine Steuereinrichtung (530) zum Öffnen des Schalters (520), wenn Polynome zu verarbeiten sind.

**11.** Rechenwerk nach Anspruch 10, bei dem eine Mehrzahl von Drei-Operanden-Addierern vorhanden ist, wobei die Anzahl der vorhandenen Drei-Operanden-Addierer größer oder gleich der Anzahl von Stellen der Modul-Ganzzahl oder des Moduls ist.

**Claims**

**1.** Method for modular multiplying a multiplicand (C) by a multiplier (M) using a modulus (N) within a cryptographic calculation executed in a calculating unit, said multiplicand (C), said multiplier (M) and said modulus (N) being parameters in said cryptographic calculation, said multiplicand (C), said multiplier (M) and said modulus (N) being polynomials of a variable (x) from the body $GF(2^n)$, and wherein coefficients of the polynomials can only have the value "0" or "1", said method comprising the following steps:

(a) performing (210) a multiplication look-ahead method to obtain a multiplication shift value ($s_Z$), said multiplication shift value ($s_Z$) being incremented at a power of said multiplier, which is not present in the multiplier polynomial;
(b) multiplying (214) said variable (x) raised to the power of said multiplication shift value ($s_Z$) by an intermediate result polynomial (Z) to obtain a shifted intermediate result polynomial (Z');
(c) performing a reduction look-ahead method (212) to obtain a reduction shift value ($s_N$), said reduction shift value ($s_N$) being equal to the difference of the degree of the shifted intermediate result polynomial (Z) and the degree of the modulus polynomial (N);
(d) multiplying (216) said variable (x) raised to the power of said reduction shift value ($s_N$) by said modulus polynomial (N) to obtain a shifted modulus polynomial (N');
(e) summing (218) said shifted intermediate result polynomial (Z') and said multiplicand (C) and subtracting said shifted modulus polynomial (N') to obtain an updated intermediate result polynomial (Z); and
(f) repeating (226) steps (a) to (e) until all the powers of said multiplier (M) have been processed, wherein in the repetition of steps (a) to (e)

in step (b) said updated intermediate result polynomial (Z) of the previous step (e) is used as said intermediate result polynomial (Z), and
in step (c) said shifted polynomial of the previous step (d) is used as a modulus polynomial (N), and
wherein said summing and subtracting (218) in step (e) is carried out by bitwise XORing said intermediate result polynomial (Z'), said multiplicand (C) and said shifted modulus polynomial (N').

**2.** Method according to claim 1, wherein said multiplying (210) in step (d) is carried out by shifting said intermediate result polynomial (Z) by a number of digits equalling said multiplication shift value ($s_Z$), and
wherein said multiplying (216) in step (d) is carried out by shifting said modulus polynomial (M) by a number of digits equalling said reduction shift value ($s_N$).

**3.** Method according to one of the preceding claims, wherein said step of said reduction look-ahead method (212) to obtain a reduction shift value ($s_N$) comprises the following steps:

determining (414) an auxiliary shift value ($s_i$) so that the degree of said modulus polynomial (N) and the degree of said updated intermediate result polynomial (Z) of the previous step (e) multiplied by a variable which is raised to the power of said auxiliary shift value ($s_i$) are equal, and
forming (422) the difference of said multiplication shift value ($s_Z$) and said auxiliary shift value ($s_i$) to obtain said reduction shift value ($s_N$).

**4.** Method according to claim 3, wherein said step of performing said multiplication look-ahead method (210) and said step of determining (414) said auxiliary shift value ($s_i$) are carried out parallel to each other.

**5.** Method according to one of the preceding claims,
wherein said multiplication shift value ($s_Z$) is limited to a maximum multiplication shift value (k),
wherein said step of performing (210) said multiplication shift method comprises the following steps:

if said multiplication shift value equals said maximum multiplication shift value (k),

equating said multiplication shift value ($s_Z$) with said maximum shift value (k),
creating (306, 324) a multiplication look-ahead parameter (a) with a predetermined value, and

wherein said step of summing comprises the following steps:

if said multiplication look-ahead parameter (a) has said predetermined value,
summing only said predetermined intermediate result polynomial (Z') and said shifted modulus polynomial (N').

6. Apparatus for modular multiplying a multiplicand (C) by a multiplier (M) using a modulus (N) within a cryptographic calculation, said multiplicand (C), said multiplier (M) and said modulus (N) being parameters in said cryptographic calculation, said multiplicand (C), said multiplier (M) and said modulus (N) being polynomials of a variable (x) from the body GF($2^n$), and wherein coefficients of the polynomials can only have the value "0" or "1", said apparatus comprising:

(a) means for performing (210) a multiplication look-ahead method to obtain a multiplication shift value ($s_Z$), said multiplication shift value ($s_Z$) being incremented at a power of said multiplier, which is not present in the multiplier polynomial;
(b) means for multiplying (214) said variable (x) which is raised to the power of said multiplication shift value ($s_Z$) by an intermediate result polynomial (Z) to obtain a shifted intermediate result polynomial (Z');
(c) means for performing a reduction look-ahead method (212) to obtain a reduction shift value ($s_N$), said reduction shift value ($s_N$) being equal to the difference of the degree of the shifted intermediate result polynomial (Z) and the degree of the modulus polynomial (N);
(d) means for multiplying (216) said variable (x) which is raised to the power of said reduction shift value ($s_N$) by said modulus polynomial (N) to obtain a shifted modulus polynomial (N');
(e) means for summing (218) said shifted intermediate result polynomial (Z') and said multiplicand (C) and subtracting said shifted modulus polynomial (N') to obtain an updated intermediate result polynomial (Z); and
(f) means for repeatedly controlling (226) said means (a) to (e) until all the powers of said multiplier (M) have been processed, wherein in a repeated control of said means (a) to (e)

said means for multiplying (214) to obtain a shifted intermediate result polynomial is arranged to use said updated intermediate result polynomial (Z) of the previous control of said means for summing (218) as an intermediate result polynomial (Z), and
said means for performing a reduction look-ahead method (212) is arranged to use, in a repeated control, as the modulus polynomial (N), said shifted modulus polynomial of the previous control of said means for multiplying (216) to obtain a shifted modulus polynomial, and
wherein said means (218) for summing the shifted intermediate result polynomial (Z') and said multiplicand polynomials (C) and for subtracting the shifted modulus polynomial (N') is carried out as bitwise XORing said intermediate result polynomial (Z'), said multiplicand (C) and said shifted modulus polynomial (N')

7. Apparatus according to claim 6, wherein said means (214) for multiplying to obtain a shifted intermediate result polynomial (Z') and said means (216) for multiplying to obtain a shifted modulus polynomial (N') are implemented as controllable shift registers to perform, depending on said multiplication shift value ($s_Z$) or on said reduction shift value ($s_N$), a shift of the register contents by a corresponding number of digits.

8. Apparatus according to claims 6 or 7, said means (218) for summing and subtracting comprising:

a counter (500) with three input lines and two output lines, wherein a bit of said intermediate result polynomial (Z) can be applied to a first input line, wherein a bit of said multiplicand (C) can be applied to a second input line, and wherein a bit of said shifted modulus polynomial (N') can be applied to a third input line;
a full adder (510) with three inputs and one output, a low- order output of said counter (500) being connected to a higher order input line of said full adder (510);
a switch (520) connected between a higher order output line of said counter (500) and a middle input of a full adder (510) for a higher order bit; and
a control unit (530) for opening said switch (520) when polynomials are to be processed.

9. Apparatus according to claim 6,
formed as calculating unit for multiplying the multiplicand by a multiplier using the modulus,
wherein the calculating unit is further optionally formed for multiplying a multiplicand integer by a multiplier integer using a modulus integer,
wherein the means for summing is formed as a three-operands adder (700) with a carry disabling means (730) for combining either the integer operands or the polynomial intermediate result, said shifted modulus polynomial and said polynomial multiplicand ; and
wherein the apparatus further comprises a control means (730) for controlling said carry disabling means, wherein the control means is formed so that a carry is deactivated when polynomial operands are processed and so that the carry is activated when integer operands are processed.

10. Calculating unit according to claim 9, said three-operands adder with a carry disabling means comprising:

a counter (500) with three input lines and two output lines, wherein a bit of said intermediate result polynomial can be applied to a first input line, wherein a bit of said multiplicand (C) can be applied to a second input line, and wherein a bit of said shifted modulus polynomial can be applied to a third input line;
a full adder (510) with three inputs and one output, a low- order output of said counter (500) being connected to a higher order input line of said full adder (510);
a switch (520) being connected between a higher order output line of said counter (500) and a middle input of a full adder (510) for a next higher bit; and
a control unit (530) for opening said switch (520) when polynomials are to be processed.

11. Calculating unit according to claim 10, wherein a plurality of three-operands adders are present, the number of three-operands adders present being greater than or equal to the number of digits of the modulus integer or the polynomial integer.

**Revendications**

1. Procédé de multiplication modulaire d'un multiplicande (C) par un multiplicateur (M), en utilisant un module (N) à l'intérieur d'un calcul cryptographique exécuté dans une unité de calcul, le multiplicande (C), le multiplicateur (M) et le module (N) étant des paramètres du calcul cryptographique, le multiplicande (c), le multiplicateur (M) et le module (N) étant des polynômes d'une variable (x) du corps GF ($2^n$) et les coefficients des polynômes ne pouvant avoir que la valeur "0" ou "1", ayant les étapes suivantes, consistant à :

(a) appliquer (210) un procédé de prévision de multiplication, pour obtenir une valeur de décalage de multiplication ($s_Z$), la valeur de décalage de multiplication $s_Z$ étant incrémentée, dans le cas d'une puissance du multiplicateur, qui n'existe pas dans le polynôme du multiplicateur ;
(b) multiplier (214) la variable (x), élevée à une puissance plus haute par la valeur de décalage de multiplication ($s_Z$), par un polynôme du résultat intermédiaire (Z), pour obtenir un polynôme du résultat intermédiaire décalé (Z') ;
(c) appliquer un procédé de prévision de réduction (212), pour obtenir une valeur de décalage de réduction ($s_N$), la valeur de décalage de réduction ($s_N$) étant identique à la différence du degré du polynôme du résultat intermédiaire (Z) décalé et du degré du polynôme du module (N);
(d) multiplier (216) la variable (x), élevée à une puissance plus haute par la valeur de décalage de réduction ($s_N$), par le polynôme du module (N), pour obtenir un polynôme du module (N') décalé ;
(e) additionner (218) le polynôme du résultat intermédiaire décalé (Z') et du multiplicande (C) et soustraire le polynôme du module décalé (N'), pour obtenir un polynôme du résultat intermédiaire actualisé (Z) et
(f) répéter (226) les étapes (a) à (e), jusqu'à ce que toutes les puissances du multiplicateur (M) soient prises en charge, moyennant quoi, lors de la répétition des étapes (a) à (e),

• au cours de l'étape (b), le polynôme du résultat intermédiaire actualisé (Z) de l'étape précédente (e) est utilisé en tant que polynôme du résultat intermédiaire (Z), et au cours de l'étape (c) le polynôme du module décalé de l'étape (d) précédente est utilisé en tant que polynôme de module (N), et
• l'addition et la soustraction (218) étant exécutées, au cours de l'étape (e), par le biais d'une combinaison OU exclusif par bit du polynôme du résultat intermédiaire (Z'), du polynôme du multiplicande (C) et du polynôme du module décalé (N').

2. Procédé selon la revendication 1,

- dans lequel la multiplication (210) est exécutée, au cours de l'étape (d), par le biais du décalage du polynôme du résultat intermédiaire (Z) d'un nombre de positions identique à la valeur de décalage de multiplication ($s_Z$) et
- dans lequel la multiplication (216) est exécutée, au cours de l'étape (d), par le biais du décalage du polynôme du module (M) d'un nombre de positions identique à la valeur de décalage de réduction ($s_N$).

3. Procédé selon l'une des revendications précédentes, dans lequel l'étape du procédé de prévision de réduction (212) présente, pour obtenir une valeur de décalage de réduction ($s_N$), les étapes suivantes, consistant à :

• définir (414) une valeur de décalage auxiliaire ($s_i$), de sorte que le degré du polynôme du module (N) et le degré du polynôme du résultat intermédiaire actualisé (Z) de l'étape précédente (e), multiplié par la variable, qui est élevée à une puissance plus haute par la valeur de décalage auxiliaire ($s_i$), sont identiques et
• former (422) la différence de la valeur de décalage de multiplication ($s_Z$) et de la valeur de décalage auxiliaire ($s_i$), pour obtenir la valeur de décalage de réduction ($s_N$).

4. Procédé selon la revendication 3, dans lequel l'étape d'application du procédé de prévision de multiplication (210) et l'étape de définition (414) de la valeur de décalage auxiliaire ($s_i$) sont exécutées parallèlement entre elles.

5. Procédé selon l'une des revendications précédentes,

- dans lequel la valeur de décalage de multiplication ($s_Z$) est limitée à une valeur de décalage de multiplication maximale (k),
- dans lequel l'étape d'application (210) du procédé de prévision de multiplication présente les étapes suivantes, consistant à :

* au cas où la valeur de décalage de multiplication serait identique à la valeur de décalage de multiplication (k),

• à mettre en équivalence la valeur de décalage de multiplication ($s_Z$) avec la valeur de décalage maximale (k) ;
• à générer (306, 324) un paramètre de prévision de multiplication (a) avec une valeur prédéfinie et

- dans lequel l'étape d'addition présente l'étape suivante, consistant à :

* au cas où le paramètre de prévision de multiplication (a) a la valeur prédéfinie,

• à additionner uniquement le polynôme du résultat intermédiaire prédéfini (Z') et le polynôme du module décalé (N').

6. Système de multiplication modulaire d'un multiplicande (C) par un multiplicateur (M), en utilisant un module (N), à l'intérieur d'un calcul cryptographique, le multiplicande (c), le multiplicateur (M) et le module (N) étant des paramètres du calcul cryptographique, le multiplicande (C), le multiplicateur (M) et le module (N) étant des polynômes d'une variable (x) du corps GF (2") et les coefficients des polynômes ne pouvant avoir que la valeur "0" ou "1", avec les caractéristiques suivantes :

(a) d'un dispositif pour appliquer (210) un procédé de prévision de multiplication, pour obtenir une valeur de décalage de multiplication ($s_Z$), la valeur de décalage de multiplication $s_Z$ étant incrémentée dans le cas d'une puissance du multiplicateur, qui n'existe pas dans le polynôme du multiplicateur ;
(b) d'un dispositif pour multiplier (214) la variable (x), qui est élevée à une puissance plus haute par la valeur de décalage de multiplication ($s_Z$), par un polynôme du résultat intermédiaire (Z), pour obtenir un polynôme du résultat intermédiaire décalé (Z') ;
(c) d'un dispositif pour appliquer un procédé de prévision de réduction (212), pour obtenir une valeur de décalage de réduction ($s_N$), la valeur de décalage de réduction ($s_N$) étant identique à la différence du degré du polynôme du résultat intermédiaire (Z) décalé et du degré du polynôme du module (N) ;
(d) d'un dispositif pour multiplier (216) la variable (x), qui est élevée à une puissance plus élevée par la valeur de décalage de réduction ($s_N$) et le polynôme du module (N), pour obtenir un polynôme du module décalé (N') ;
(e) d'un dispositif pour additionner (218) le polynôme du résultat intermédiaire (Z') et le multiplicande (C) et soustraire le polynôme du module décalé (N'), pour obtenir un polynôme du résultat intermédiaire (Z) actualisé et
(f) d'un dispositif pour commander de manière répétée (226) les dispositifs (a) à (e), jusqu'à ce que toutes les puissances du multiplicateur (M) soient prises en charge, moyennant quoi, lors d'une commande répétée des dispositifs (a) à (e),

> • le dispositif de multiplication (214), pour obtenir un polynôme du résultat intermédiaire décalé, est agencé, pour utiliser, en tant que polynôme du résultat intermédiaire (Z), le polynôme du résultat intermédiaire actualisé (Z) de la commande précédente du dispositif d'addition (218) et
> • le dispositif d'application d'un procédé de prévision de réduction (212) est agencé, pour utiliser, lors d'une commande répétée en tant que polynôme du module (N), le polynôme du module décalé de la commande précédente du dispositif de multiplication (216), pour obtenir un polynôme du module décalé et
> • l'un des dispositifs d'addition (218) du polynôme du résultat intermédiaire décalé (Z') et du polynôme du multiplicande (C) et de soustraction du polynôme du module décalé (N') étant exécuté en tant que combinaison OU exclusif par bit du polynôme du résultat intermédiaire (Z'), du multiplicande (C) et du polynôme du module décalé (N').

**7.** Système selon la revendication 6, dans lequel le dispositif (214) de multiplication, pour obtenir un polynôme du résultat intermédiaire décalé (Z') et le dispositif (216) de multiplication, pour obtenir un polynôme du module décalé (N'), sont exécutés en tant que registre de décalage réglable, pour appliquer, en fonction de la valeur de décalage de multiplication ($s_Z$) ou de la valeur de décalage de réduction ($s_N$), un décalage du contenu du registre d'un nombre correspondant de positions.

**8.** Système selon la revendication 6 ou 7, dans lequel le dispositif (218) d'addition et de soustraction présente les caractéristiques suivantes :

> • un compteur (500), avec trois lignes d'entrée et deux lignes de sortie, un bit du polynôme du résultat intermédiaire (Z) pouvant être appliqué à une première ligne d'entrée, un bit du multiplicande (C) pouvant être appliqué à une deuxième ligne d'entrée et un bit du polynôme du module décalé (N') pouvant être appliqué à une troisième ligne d'entrée,
> • un additionneur complet (510), avec trois entrées et une sortie, une sortie d'ordre inférieur du compteur (500) étant reliée à une ligne d'entrée d'ordre supérieur de l'additionneur complet (510) ;
> • un commutateur (520), qui est monté entre une ligne de sortie d'ordre supérieur du compteur (500) et une entrée centrale d'un additionneur complet (510), pour un bit d'ordre supérieur et
> • un dispositif de commande (530), pour ouvrir le commutateur (520), quand il y a lieu de traiter des polynômes.

**9.** Système selon la revendication 6,

> • qui est constitué en tant qu'unité de calcul de multiplication du multiplicande par le multiplicateur, en utilisant le module,
> • l'unité de calcul étant constituée, en outre, au choix, pour multiplier un nombre entier de multiplicande par un nombre entier de multiplicateur, en utilisant un nombre entier de module,
> • le dispositif d'addition étant constitué en tant qu'additionneur à trois opérandes (700), qui présente un dispositif de coupure de report (730), pour combiner soit les opérandes à nombres entiers, soit un résultat intermédiaire de polynôme, le polynôme du module décalé et le polynôme du multiplicande,
> • le système présentant, en outre, un dispositif de commande (730), pour commander le dispositif de coupure de report, le dispositif de commande étant constitué, de sorte qu'un report est désactivé, quand les opérandes des polynômes sont traités et que le report est activé, quand les opérandes à nombres entiers sont traités.

**10.** Unité de calcul selon la revendication 9, dans laquelle l'additionneur à trois opérandes, avec un dispositif de coupure de report, présente les caractéristiques suivantes :

> • un compteur (500), avec trois lignes d'entrée et deux lignes de sortie, un bit du résultat intermédiaire pouvant être appliqué à une première ligne d'entrée, un bit du multiplicande (C) pouvant être appliqué à une deuxième ligne d'entré et un bit du module décalé pouvant être appliqué à une troisième ligne d'entrée,
> • un additionneur complet (510), ayant trois entrées et une sortie, une sortie d'ordre inférieur du compteur (500) étant reliée à une ligne d'entrée d'ordre supérieur de l'additionneur complet (510),
> • un commutateur (520), qui est monté entre une ligne de sortie d'ordre supérieur du compteur (500) et une entrée centrale d'un additionneur complet (510), pour un bit immédiatement supérieur et
> • un dispositif de commande (530), pour ouvrir le commutateur (520), quand il y a lieu de traiter des polynômes.

**11.** Unité de calcul selon la revendication 10, dans laquelle existe une pluralité d'additionneurs à trois opérandes, le nombre des additionneurs à trois opérandes existants étant supérieur ou égal au nombre de positions du nombre entier du module ou du module.

$$C(x) = [M(x)]^E \bmod N(x)$$

Start

M(x), N(x), E

C(x) := 1

e := 0

E[e] = 1 ?

**NEIN**

**JA**

C(x) := C(x) · M(x) mod N(x)

C(x) := C(x) · C(x) mod N(x)

e := e + 1

e = L(E)

**NEIN**

**JA**

C(x)

Stopp

# FIG 1

200 — Start

Multiplikand
↓
$Z(x) = C(x) \cdot M(x) \bmod N(x)$
↑
Multiplikator

202 — M, C, N

204 — Z := 0

206 — m := L(M)

208 — n := 0

210 — GenLAMult $(a, S_Z)$

230

$S_Z$

212 — GenLAMod $(b, S_N)$

214 — Z' := $x^{S_Z} \cdot Z$

216 — N' := $x^{S_N} \cdot N$

226

218 — Z := Z' + a·C + b·N'

220 — m = 0 UND n = 0

NEIN

JA

222 — Z

224 — Stopp

**FIG 2**

Gen LAMult:

300 — Start

302 — m, $cur_k$ , M

304 — $S_Z := 0$

306 — a := 1

NEIN

JA

308 — M[L(M) - m - 1] $\neq$ 0

322

310 — m := m + 1

312 — $S_Z := S_Z + 1$

316 — m $\neq$ L(K) UND $S_Z \neq cur_k$

NEIN

JA

324 — a := 0

318 — m := m + 1

320 — $S_Z := S_Z + 1$

314 — a, $S_Z$

326 — Stopp

FIG 3

EP 1 360 579 B1

Gen LAMod

400 → Start

402 → n, $cur_k$, MAX, $S_Z$, N, Z, k

404 → $S_i := 0$

406 → n = 0 ODER $S_i$ = k ?

JA / NEIN

416

410 → n := n + 1

412 → $S_i := S_i + 1$

414 → deg($x^{S_i}Z$) := deg(N)

NEIN

JA

408 → b := 1

418 → b := 1

230

$S_Z$ von GenLAMult

420 → n := $S_Z$ - n

422 → $S_N := S_Z - S_i$

424 → n > MAX - k

JA / NEIN

$cur_k := MAX - n$

426

$cur_k := k$

428

430 → b, $S_N$

432 → Stopp

FIG 4

24

**FIG 5**

SC = 1 für normale Addition
SC = 0 für XOR

## FIG 6

GF(p) / GF($2^n$)-Rechenwerk

**FIG 7**

FIG 8A

FIG 8B

FIG 8C

900 — Start

M , C , N

Z := 0

LA := 0

m := L(M)

n := 0

910

Gen_Mult_LA
(a, $S_Z$)

930 — Gen_Mod_LA
(b, $S_N$)

920

SHL Z, $S_Z$

940 — SHL N, $S_N$

Z′                    N′

950 — Z := Z′ + a·C + b·N′

m = 0 AND n = 0 ?          NEIN

JA

Z < 0 ?          NEIN

JA

Z := Z + N

Z

FIG 9

(STAND DER
TECHNIK)

960 — Stopp

29